# EUROPEAN PATENT APPLICATION

(11) **EP 4 528 447 A1**
(43) Date of publication of application: **26.03.2025**
(21) Application number: 23884370.0
(22) Date of filing: 14.08.2023
(51) Int. Cl.: G06F 3/0481

(54) **IMAGE DRAWING METHOD AND ELECTRONIC DEVICE**

(30) Priority: 04.11.2022 CN 202211379191
(71) Applicant: Honor Device Co., Ltd., Shenzhen, Guangdong 518040 (CN)
(72) Inventor: QI, Changle, Shenzhen, Guangdong 518040 (CN); LI, Fei, Shenzhen, Guangdong 518040 (CN); GUO, Zihan, Shenzhen, Guangdong 518040 (CN); GUO, Wenjuan, Shenzhen, Guangdong 518040 (CN)
(74) Representative: Epping - Hermann - Fischer
(86) International application number: PCT/CN2023/112799
(87) International publication number: WO 2024/093431

(57) **Abstract**

Embodiments of this application disclose an image drawing method and an electronic device, and relate to the electronic device field, to reduce, when an application program is in a background of an electronic device, power consumption of the electronic device. A specific solution is as follows: The electronic device receives a starting operation by a user. The electronic device starts a first application program in response to the starting operation. In a case in which at least one window of the first application program runs in a foreground of the electronic device, the electronic device executes an image drawing operation corresponding to the first application program based on a first frequency. In a case in which all windows of the first application program are switched to running in a background, the electronic device executes an image drawing operation corresponding to the first application program based on a second frequency, where the second frequency is less than the first frequency.

## Description

This application claims priority to Chinese Patent Application No. 202211379191.8, filed with the China National Intellectual Property Administration on November 4, 2022 and entitled "IMAGE DRAWING METHOD AND ELECTRONIC DEVICE", which is incorporated herein by reference in its entirety.

### TECHNICAL FIELD

This application relates to the electronic device field, and in particular, to an image drawing method and an electronic device.

### BACKGROUND

With the popularity of electronic devices such as mobile phones, a user often starts a plurality of application programs when using a mobile phone. When a mobile phone is used, an interface of one application program is usually displayed on a screen of the mobile phone. That is, the application program runs in a foreground of the mobile phone, and an application program that is not displayed runs in a background of the mobile phone.

When the application program runs in the foreground of the mobile phone, the mobile phone correspondingly draws the interface corresponding to the application program in the foreground. Instead, when the application program runs in the background of the mobile phone, the mobile phone does not need to draw an interface corresponding to the application program in the background.

However, for some application programs, when an application program is in a background of a mobile phone, the application program still requests the mobile phone to draw an interface corresponding to the application program. Consequently, a system resource of the mobile phone is wasted, and power consumption of the mobile phone is large.

### SUMMARY

Embodiments of this application provide an image drawing method and an electronic device, to reduce, when an application program is in a background of an electronic device such as a mobile phone, power consumption of the electronic device such as the mobile phone.

To achieve the foregoing objective, the following technical solutions are used in embodiments of this application.

According to a first aspect, an embodiment of this application provides an image drawing operation method, applied to an electronic device, where the image drawing method may include: The electronic device receives a starting operation by a user. The electronic device starts a first application program in response to the starting operation. In a case in which at least one window of the first application program runs in a foreground of the electronic device, the electronic device executes an image drawing operation corresponding to the first application program based on a first frequency. In a case in which all windows of the first application program are switched to running in a background, the electronic device executes an image drawing operation corresponding to the first application program based on a second frequency, where the second frequency is less than the first frequency.

According to the method of the first aspect, when all windows of an application program of an electronic device are background windows, the electronic device may reduce a frequency of drawing a background application program. In this way, a waste of a system resource of the electronic device can be avoided, for example, a waste of a resource of a CPU of the electronic device is avoided, thereby reducing power consumption of the electronic device.

With reference to the first aspect, in another possible implementation, that the electronic device executes an image drawing operation corresponding to the first application program based on a first frequency may include: A display synthesis system of the electronic device generates a first vertical synchronization signal, where a frequency of the first vertical synchronization signal is the first frequency. A choreographer corresponding to the first application program executes the image drawing operation corresponding to the first application program based on the received first vertical synchronization signal. That the electronic device executes an image drawing operation corresponding to the first application program based on a second frequency may include: The display synthesis system of the electronic device generates a second vertical synchronization signal, where a frequency of the second vertical synchronization signal is the second frequency. The choreographer corresponding to the first application program executes the image drawing operation corresponding to the first application program based on the received second vertical synchronization signal.

According to the possible implementation, when all windows of an application program are background windows, a frequency at which a display synthesis system sends a vertical synchronization signal to a choreographer corresponding to the application program can be reduced. In this way, the frequency at which the choreographer corresponding to the application program receives the vertical synchronization signal is reduced, and a frequency at which the choreographer corresponding to the application program executes a drawing operation based on the received vertical synchronization signal is reduced.

With reference to the first aspect, in another possible implementation, before that the display synthesis system of the electronic device generates a second vertical synchronization signal, the image drawing method may further include: The first application program sends an image drawing request to the choreographer corresponding to the application program. The choreographer corresponding to the application program sends vertical synchronization signal request information to the display synthesis system of the electronic device at the first frequency in response to the image drawing request. The display synthesis system of the electronic device receives the vertical synchronization signal request information, and sends the vertical synchronization signal request information to hardware of the electronic device at the first frequency. The hardware of the electronic device sends a vertical synchronization signal to the display synthesis system of the electronic device in response to the received vertical synchronization signal request information. The display synthesis system of the electronic device receives the vertical synchronization signal sent by the hardware of the electronic device.

According to the possible implementation, when all windows of an application program are background windows, a previous frequency is reduced by a display synthesis system to request for a vertical synchronization signal, but the vertical synchronization signal is sent to a choreographer corresponding to the application program at the frequency after reduction. In this way, a frequency at which the choreographer corresponding to the application program receives the vertical synchronization signal is reduced, and a frequency at which the choreographer corresponding to the application program executes a drawing operation based on the received vertical synchronization signal is reduced. Therefore, a frequency of drawing a background application program can be reduced, and a waste of a system resource of an electronic device can be avoided. With reference to the first aspect, in another possible implementation, before that the display synthesis system of the electronic device generates a second vertical synchronization signal, the image drawing method may further include: The first application program sends an image drawing request to the choreographer corresponding to the application program. The choreographer corresponding to the application program sends vertical synchronization signal request information to the display synthesis system of the electronic device at the first frequency in response to the image drawing request. The display synthesis system of the electronic device receives the vertical synchronization signal request information, and sends the vertical synchronization signal request information to hardware of the electronic device at the first frequency. The hardware of the electronic device sends a vertical synchronization signal to the display synthesis system of the electronic device in response to the received vertical synchronization signal request information. The display synthesis system of the electronic device receives the vertical synchronization signal sent by the hardware of the electronic device.

According to the possible implementation, when there is a foreground window in a window of an application program, a display synthesis system requests for a vertical synchronization signal at a frequency before reduction, and sends the vertical synchronization signal to a choreographer corresponding to the application program at the frequency before reduction. In this way, a frequency at which the choreographer corresponding to the application program receives the vertical synchronization signal is not reduced, and corresponding display of the application program is not affected.

With reference to the first aspect, in another possible implementation, that the electronic device executes an image drawing operation corresponding to the first application program based on a second frequency may include: A display synthesis system of the electronic device sends first vertical synchronization signals to a choreographer corresponding to the first application program at the first frequency. The choreographer corresponding to the first application program receives a part of vertical synchronization signals in the first vertical synchronization signals. The choreographer corresponding to the first application program executes the image drawing operation corresponding to the first application program based on the part of vertical synchronization signals in the first vertical synchronization signals, where a time interval between any two vertical synchronization signals in the part of vertical synchronization signals is a reciprocal of the second frequency.

According to the possible implementation, when all windows of an application program are background windows, a vertical synchronization signal may be sent to a choreographer corresponding to the application program by a display synthesis system at a frequency before reduction. After receiving the frequency of the vertical synchronization signal, the choreographer corresponding to the application program executes a drawing operation at a frequency after reduction. In this way, the choreographer corresponding to the application program reduces a frequency of executing the drawing operation.

With reference to the first aspect, in another possible implementation, the image drawing method may further include: The choreographer corresponding to the first application program sends vertical synchronization signal request information to the display synthesis system of the electronic device, where a time interval between any two pieces of vertical synchronization signal request information in the vertical synchronization signal request information is greater than a first threshold, and the first threshold is determined based on the second frequency.

According to the possible implementation, when all windows of an application program are background windows, a choreographer corresponding to the application program may send vertical synchronization signal request information to a display synthesis system of an electronic device at a frequency after reduction. Therefore, a frequency at which the display synthesis system sends a vertical synchronization signal to the choreographer corresponding to the application program can be reduced. After receiving the frequency of the vertical synchronization signal, the choreographer corresponding to the application program can execute a drawing operation at the frequency after reduction. In this way, the choreographer corresponding to the application program reduces a frequency of executing the drawing operation.

With reference to the first aspect, in another possible implementation, the first threshold may be the reciprocal of the second frequency.

According to the possible implementation, a first threshold is a reciprocal of a second frequency, so that a time interval of vertical synchronization signal request information transmission by a choreographer corresponding to an application program to a display synthesis system of an electronic device can be determined, and the choreographer corresponding to the application program can send the vertical synchronization signal request information to the display synthesis system of the electronic device at a frequency after reduction.

With reference to the first aspect, in another possible implementation, that the electronic device executes an image drawing operation corresponding to the first application program based on a second frequency may include: A display synthesis system of the electronic device sends a first vertical synchronization signal to a choreographer corresponding to the first application program at the first frequency. The choreographer corresponding to the first application program receives the first vertical synchronization signal. In a case in which the choreographer corresponding to the first application program determines that a time interval between a moment of receiving the first vertical synchronization signal and a moment of last executing the image drawing operation corresponding to the first application program is greater than a second threshold, the choreographer corresponding to the first application program executes the image drawing operation corresponding to the first application program, where the second threshold is determined based on the second frequency.

According to the possible implementation, when all windows of an application program are background windows, a choreographer corresponding to the application program may execute an image drawing operation corresponding to the application program in a case in which a time interval between a moment of receiving a vertical synchronization signal and a moment of last executing the image drawing operation corresponding to the application program is greater than a second threshold. In this way, the choreographer corresponding to the application program reduces a frequency of executing the drawing operation.

With reference to the first aspect, in another possible implementation, after all the windows of the first application program are switched to running in the background, the image drawing method may further include: In a case in which at least one window of the first application program is switched from running in the background of the electronic device to running in the foreground of the electronic device, the electronic device executes the image drawing operation corresponding to the first application program based on the first frequency.

According to the possible implementation, when all windows of an application program are background windows, if at least one window of the application program is switched to running in a foreground, a frequency of executing a drawing operation is restored to a previous frequency. In this way, corresponding display of the application program is not affected.

With reference to the first aspect, in another possible implementation, the first application program may include a music playback application program or a video playback application program.

According to the possible implementation, when a music playback application program or a video playback application program is used, an electronic device may reduce a frequency of drawing the music playback application program or the video playback application program. In this way, a waste of a system resource of the electronic device can be reduced, thereby reducing power consumption of the electronic device.

With reference to the first aspect, in another possible implementation, the window of the first application program may include: at least one of an activity type window, a view type window, and a wallpaper type window.

According to the possible implementation, based on an activity type window, a view type window, and a wallpaper type window that are included in an application program, whether the application program is switched to running in a background may be determined.

With reference to the first aspect, in another possible implementation, in the case in which all the windows of the first application program are switched to running in the background, the image drawing method may further include: A display image on a screen of the electronic device is refreshed at the first frequency.

According to the possible implementation, when an application program is switched to running in a background, a frequency of a drawing operation corresponding to the application program is reduced without reducing a frequency of refreshing a display image on a screen of an electronic device. In this way, display of another application program by the electronic device is not affected.

With reference to the first aspect, in another possible implementation, in a case in which at least one window of all the windows of the first application program is switched to running in the foreground of the electronic device, the image drawing method may further include: The display image on the screen of the electronic device is refreshed at the first frequency.

According to the possible implementation, when an application program is switched to running in a foreground, a display image on a screen of an electronic device is refreshed at a frequency before reduction. In this way, display of the application program by the electronic device is not affected. According to a second aspect, an embodiment of this application provides an image drawing apparatus, where the image drawing apparatus is applicable to an electronic device, to implement the method in the first aspect. Functions of the image drawing apparatus may be implemented through hardware, or may be implemented through hardware executing corresponding software. The hardware or software includes one or more modules corresponding to the functions, for example, a receiving module, a starting module, a drawing module, and the like.

The receiving module may be configured to receive a starting operation by a user.

The starting module may be configured to start a first application program in response to the starting operation.

The drawing module may be configured to: in a case in which at least one window of the first application program runs in a foreground of the electronic device, execute an image drawing operation corresponding to the first application program based on a first frequency.

The drawing module may be further configured to: in a case in which all windows of the first application program are switched to running in a background, execute an image drawing operation corresponding to the first application program based on a second frequency, where the second frequency is less than the first frequency.

According to a third aspect, an image drawing device is provided, and the image drawing device has a function of implementing the method according to the first aspect. The function may be implemented through hardware, or may be implemented through hardware executing corresponding software. The hardware or software includes one or more modules corresponding to the function.

According to a fourth aspect, an image drawing device is provided, including: a processor and a memory, where the memory is configured to store computer-executable instructions; and when the image drawing device runs, the processor executes the computer-executable instructions stored in the memory, to cause the image drawing device to perform the image drawing method according to any one of the first aspect.

According to a fifth aspect, an image drawing device is provided, including: a processor, where the processor is configured to perform, after being coupled to a memory and reading instructions in the memory, the image drawing method according to any one of the first aspect based on the instructions.

According to a sixth aspect, an embodiment of this application provides a computer-readable storage medium, storing computer program instructions thereon. When the computer program instructions are executed by an electronic device, the electronic device is caused to implement the image drawing method according to any one of the first aspect or the possible implementations of the first aspect.

According to a seventh aspect, an embodiment of this application provides a computer program product, including computer-readable code. When the computer-readable code is run in an electronic device, the electronic device is caused to implement the image drawing method according to any one of the first aspect or the possible implementations of the first aspect. According to an eighth aspect, an apparatus (where, for example, the apparatus may be a chip system) is provided. The apparatus includes a processor, configured to support an electronic device in implementing the functions in the first aspect. In a possible design, the apparatus further includes a memory. The memory is configured to store program instructions and data necessary to the electronic device. The apparatus, when being a chip system, may include a chip, or may include a chip and another discrete device.

It should be understood that, for beneficial effects of the second aspect to the eighth aspect, reference may be made to the related descriptions in the first aspect, and details are not described herein again.

### BRIEF DESCRIPTION OF DRAWINGS

FIG. 1 is a schematic flowchart of image drawing according to an embodiment of this application;
FIG. 2 is a diagram of a hardware structure of an electronic device according to an embodiment of this application;
FIG. 3 is a diagram of a software structure of an electronic device according to an embodiment of this application;
FIG. 4A and FIG. 4B are a first schematic flowchart of an image drawing method according to an embodiment of this application;
FIG. 5A and FIG. 5B are a second schematic flowchart of an image drawing method according to an embodiment of this application;
FIG. 6 is a schematic flowchart of switching a window of an application program to running in a foreground according to an embodiment of this application;
FIG. 7 is a third schematic flowchart of an image drawing method according to an embodiment of this application; and
FIG. 8 is a diagram of a structure of an image drawing apparatus according to an embodiment of this application.

### DESCRIPTION OF EMBODIMENTS

The technical solutions in embodiments of this application are clearly and completely described in the following with reference to the accompanying drawings in embodiments of this application. Clearly, the described embodiments are merely a part rather than all of embodiments of this application. All other embodiments obtained by a person of ordinary skill in the art based on embodiments of this application without creative efforts shall fall within the scope of the protection of this application.

The terms "first" and "second" are used merely for the purpose of description, and shall not be construed as indicating or implying relative importance or implying a quantity of indicated technical features. Therefore, features defining "first" and "second" may explicitly or implicitly include one or more such features. In the description of this application, unless otherwise stated, "a plurality of" means two or more than two.

With the popularity of electronic devices such as mobile phones, a user downloads more and more application programs on a mobile phone. The user often starts a plurality of application programs when using the mobile phone. When the user uses the mobile phone, an interface or dynamic effect of one application program is usually displayed on a screen of the mobile phone. That is, the application program runs in a foreground of the mobile phone, and the application program running in the foreground of the mobile phone may be referred to as a foreground application program. For an application program that has been started by the user on the mobile phone but an interface or dynamic effect of the application program is not displayed on the screen of the mobile phone, the application program runs in a background of the mobile phone. That is, the application program running in the background of the mobile phone may be referred to as a background application program.

**In** other words, the foreground application program runs in the foreground of the mobile phone, and the foreground application program can directly interact with the user. The background application program runs in the background of the mobile phone, and the background application program cannot directly interact with the user.

When an application program runs in the foreground of the mobile phone, the mobile phone correspondingly draws (for example, refreshes and draws) an interface or dynamic effect corresponding to the application program in the foreground, to meet a use requirement of the user. When an application program runs in the background of the mobile phone, because an interface or dynamic effect corresponding to the application program in the background is not displayed on the screen of the mobile phone, the mobile phone does not need to draw the interface or the dynamic effect corresponding to the application program in the background.

However, for some application programs, because development of the application program, for example, a music application program, is not standardized, when the application program is in the background of the mobile phone, the application program still requests the mobile phone to draw a corresponding interface or corresponding dynamic effect, so that the mobile phone draws the corresponding interface or the corresponding dynamic effect of the application program. However, the mobile phone does not need to draw an interface or dynamic effect corresponding to the background application program, and the mobile phone does not display the interface or the dynamic effect corresponding to the background application program. Consequently, a system resource of the mobile phone is wasted, thereby causing large power consumption of the mobile phone.

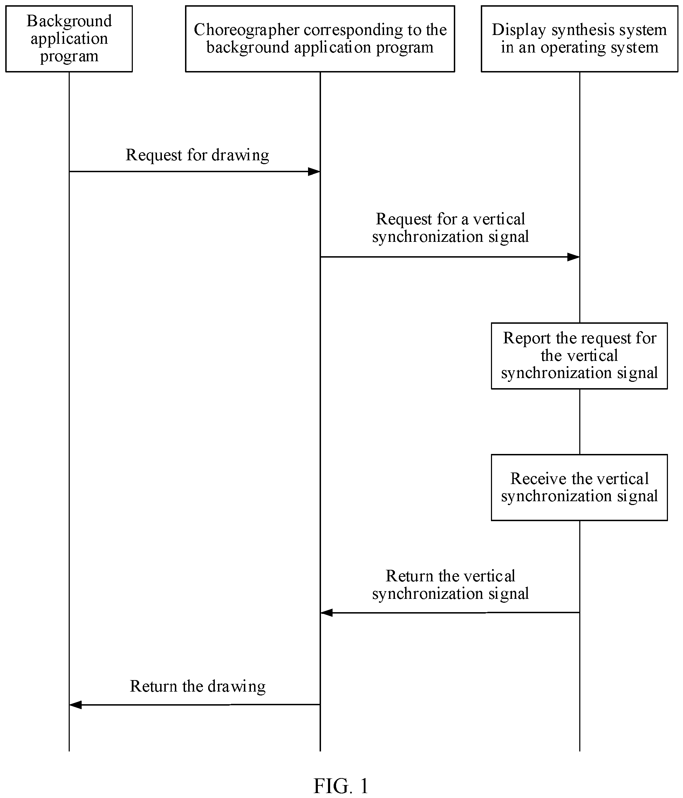

With reference to FIG. 1 below, a procedure in which an application program in a background (that is, a background application program) requests a mobile phone to draw a corresponding interface or corresponding dynamic effect is described. As shown in FIG. 1, the procedure in which the application program in the background requests the mobile phone to draw the corresponding interface or the corresponding dynamic effect may include the following steps.

The application program in the background, that is, the background application program, first sends, to a choreographer corresponding to the background application program in an operating system of the mobile phone, a request for drawing the interface or the dynamic effect corresponding to the background application program, to request the mobile phone to draw the corresponding interface or the corresponding dynamic effect. The background application program sends, to the choreographer, the request for drawing, and may call a Choreographer postCallBack interface for the application program, to request the choreographer to draw the corresponding interface or the corresponding dynamic effect.

After receiving the request for drawing sent by the background application program, the choreographer corresponding to the background application program, that is, Choreographer, sends a request for a vertical synchronization signal (Vertical synchronization, Vsync) to a display synthesis system in the operating system of the mobile phone, so that the display synthesis system reports the request for the vertical synchronization signal to hardware of the mobile phone. The choreographer sends the request for the vertical synchronization signal to the display synthesis system in the operating system of the mobile phone, and may call a scheduleVsync interface for the choreographer, thereby registering the request for the Vsync signal with the display synthesis system.

The display synthesis system is a surface module in the operating system of the mobile phone (also referred to as SurfaceFlinger). After receiving the request for the vertical synchronization signal sent by the choreographer, the display synthesis system reports the request for the vertical synchronization signal to the hardware of the mobile phone (such as a hardware writer in the mobile phone). The display synthesis system reports the request for the vertical synchronization signal to the hardware of the mobile phone at a specific frequency based on a vertical synchronization signal reporting mechanism. A frequency at which the display synthesis system reports the request for the vertical synchronization signal to the hardware of the mobile phone for the background application program is the same as a frequency at which the display synthesis system reports a request for a vertical synchronization signal to the hardware of the mobile phone for the foreground application program.

After the hardware of the mobile phone generates the vertical synchronization signal, the vertical synchronization signal may be sent to the display synthesis system, that is, the display synthesis system may receive the vertical synchronization signal.

After the display synthesis system receives the vertical synchronization signal, the display synthesis system returns the vertical synchronization signal to the choreographer corresponding to the background application program, so that the choreographer performs corresponding drawing based on the received vertical synchronization signal. The display synthesis system returns the vertical synchronization signal to the choreographer corresponding to the background application program. This may be that the display synthesis system calls an onVsync interface, to send the vertical synchronization signal to the choreographer.

After the choreographer performs corresponding drawing based on the received vertical synchronization signal, the choreographer corresponding to the background application program returns the drawing to the background application program, so that the background application program can continue to request the choreographer to draw. The choreographer corresponding to the background application program returns the drawing to the background application program. The choreographer may call doCallback, to return the drawing to the background application program. Because the frequency at which the display synthesis system reports the request for the vertical synchronization signal for the background application program is the same as the frequency at which the display synthesis system reports the request for the vertical synchronization signal for the foreground application program, a frequency of the vertical synchronization signal received by the choreographer corresponding to the background application program for the background application program is the same as a frequency of the vertical synchronization signal received by the choreographer corresponding to the background application program for the foreground application program, and a frequency (that is, a frame rate of drawing) at which the choreographer performs corresponding drawing for the background application program is the same as a frequency at which the choreographer performs corresponding drawing for the foreground application program.

For the background application program, the mobile phone does not need to draw the interface or the dynamic effect corresponding to the background application program, and the mobile phone does not display the interface or the dynamic effect corresponding to the background application program. However, the frequency at which the display synthesis system reports the request for the vertical synchronization signal for the background application program is the same as the frequency at which the display synthesis system reports the request for the vertical synchronization signal for the foreground application program, and the frequency (that is, the frame rate of drawing) at which the choreographer corresponding to the background application program performs corresponding drawing for the background application program is the same as the frequency at which the choreographer corresponding to the background application program performs corresponding drawing for the foreground application program. Consequently, a system resource of the mobile phone is wasted, for example, a resource of a CPU of the mobile phone is wasted, thereby causing large power consumption of the mobile phone.

In view of the foregoing problems, an embodiment of this application provides an image drawing method, applied to an electronic device. When an application program of the electronic device is in a background of the electronic device, the electronic device may reduce a frame rate of drawing an interface or dynamic effect corresponding to the background application program (also referred to as an image corresponding to the application program), that is, reduce a frequency of an image drawing operation corresponding to the background application program. In this way, a waste of a system resource of the electronic device can be avoided, for example, a waste of a resource of a CPU of the electronic device is avoided, thereby reducing power consumption of the electronic device.

For example, when the application program of the electronic device is in the background of the electronic device, the electronic device may reduce a frequency at which a display synthesis system sends a vertical synchronization signal to a choreographer corresponding to the application program. Therefore, the frame rate of drawing the interface or the dynamic effect corresponding to the background application program by the choreographer corresponding to the background application program of the electronic device can be reduced. In this way, the waste of the system resource of the electronic device can be avoided, for example, the waste of the resource of the CPU of the electronic device is avoided, thereby reducing the power consumption of the electronic device.

For another example, when the application program of the electronic device is in the background of the electronic device, the electronic device may reduce the frame rate of drawing the interface or the dynamic effect corresponding to the background application program by the choreographer corresponding to the background application program. In this way, the waste of the system resource of the electronic device can be avoided, for example, the waste of the resource of the CPU of the electronic device is avoided, thereby reducing the power consumption of the electronic device.

The image drawing method provided in this embodiment of this application is described below.

The image drawing method provided in this embodiment of this application is applicable to the electronic device. In some embodiments, the electronic device may be a mobile phone, a tablet computer, a handheld computer, a personal computer (personal computer, PC), a cellular phone, a personal digital assistant (personal digital assistant, PDA), or a wearable device. A specific form of the electronic device is not limited in this embodiment of this application.

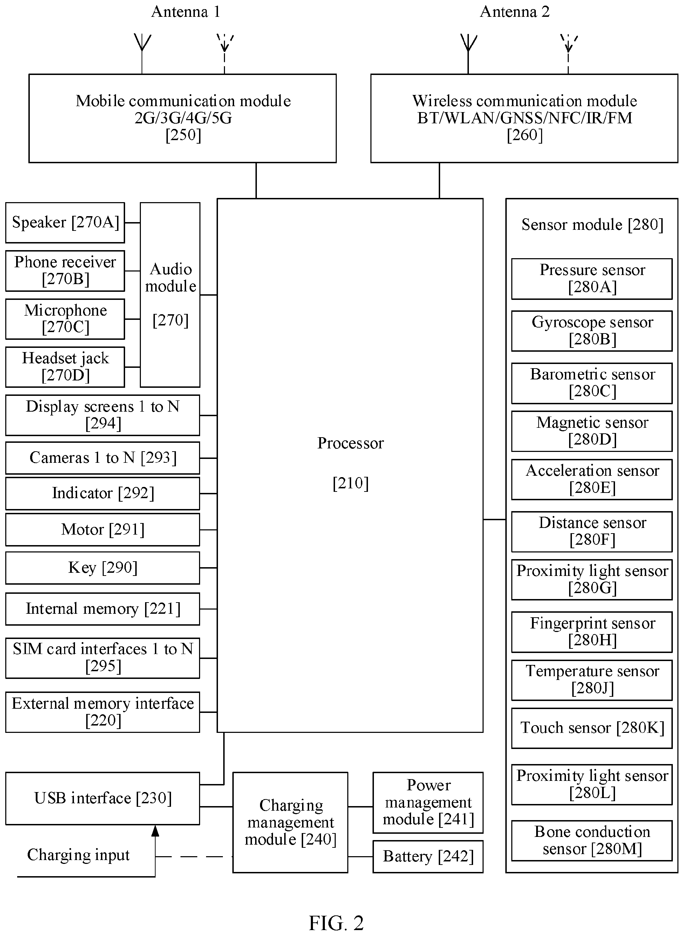

For example, the electronic device is the mobile phone. FIG. 2 is a diagram of a structure of an electronic device according to an embodiment of this application.

As shown in FIG. 2, the electronic device may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a phone receiver 270B, a microphone 270C, a headset jack 270D, a sensor module 280, a key 290, a motor 291, an indicator 292, a camera 293, a display screen 294, a subscriber identification module (subscriber identification module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that the schematic structure in this embodiment constitutes no specific limitation on the electronic device. In some other embodiments, the electronic device may include more or fewer components than those shown in the figure, or some components may be combined, or some components may be split, or components are arranged in different manners. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate devices, or may be integrated into one or more processors.

The controller may be a nerve center and a command center of the electronic device. The controller may generate an operation control signal based on instruction operation code and a timing signal, to complete control of fetching an instruction and executing the instruction.

A memory may also be disposed in the processor 210, and is configured to store instructions and data. In some embodiments the memory in the processor 210 is a cache memory. The memory may store instructions or data recently used or cyclically used by the processor 210. If the processor 210 needs to use the instructions or the data again, the processor 210 may directly invoke the instructions or the data from the memory. This avoids repeated access, and reduces waiting time of the processor 210, thereby improving system efficiency.

In some embodiments, the processor 210 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device may be implemented through the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the electronic device may be configured to cover one or more communication frequency bands. Different antennas may be further multiplexed, to improve utilization of the antennas. For example, the antenna 1 may be multiplexed into a diversity antenna of a wireless local area network. In some other embodiments, the antenna may be used with a tuning switch.

The mobile communication module 250 may provide a solution for wireless communication including 2G/3G/4G/5G and the like applied to the electronic device. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit the electromagnetic wave to the modem processor for demodulation. The mobile communication module 250 may further amplify a signal modulated by the modem processor, and convert the signal into an electromagnetic wave through the antenna 1 for radiation. In some embodiments, at least some functional modules of the mobile communication module 250 may be disposed in the processor 210. In some embodiments, at least some functional modules of the mobile communication module 250 and at least some modules of the processor 210 may be disposed in a same device.

The wireless communication module 260 may provide a solution to wireless communication applied to the electronic device, for example, a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technology. The wireless communication module 260 may be one or more components that integrate at least one communication processing module. The wireless communication module 260 receives an electromagnetic wave through the antenna 2, performs frequency modulation and filtering processing on an electromagnetic wave signal, and sends a processed signal to the processor 210. The wireless communication module 260 may further receive a to-be-sent signal from the processor 210, perform frequency modulation and amplification on the to-be-sent signal, and convert the to-be-sent signal into an electromagnetic wave through the antenna 2 for radiation.

In some embodiments, the antenna 1 and the mobile communication module 250 of the electronic device are coupled, and the antenna 2 and the wireless communication module 260 of the electronic device are coupled, so that the electronic device can communicate with a network and another device by using a wireless communication technology. The wireless communication technology may include a global system for mobile communications (global system for mobile communications, GSM), a general packet radio service (general packet radio service, GPRS), code-division multiple access (code-division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The electronic device implements a display function through the GPU, the display screen 294, the application processor. The GPU is a microprocessor for image processing and connects the display screen 294 and the application processor. The GPU is configured to perform mathematical and geometric calculations, and is configured to render graphics. The processor 210 may include one or more GPUs, and execute program instructions to generate or change display information.

The display screen 294 is configured to display an image, a video, and the like. The display screen 294 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a Miniled, a MicroLed, a Micro-oLed, quantum dot light-emitting diodes (quantum dot light-emitting diodes, QLED), or the like. In some embodiments, the electronic device may include one or N display screens 294. N is a positive integer greater than 1.

The electronic device may implement a photographing function through the ISP, the camera 293, the video codec, the GPU, the display screen 294, the application processor, and the like. In some embodiments, the electronic device may include one or N cameras 293. N is a positive integer greater than 1.

The internal memory 221 may be configured to store computer-executable program code. The executable program code includes instructions. The processor 210 runs the instructions stored in the internal memory 221, to execute various function applications and data processing of the electronic device. The internal memory 221 may include a program storage area and a data storage area. The program storage area may store an operating system, an application program required by at least one function (such as a sound playback function and an image playback function), and the like. The data storage area may store data (for example, audio data and an address book) created during use of the electronic device. In addition, the internal memory 221 may include a high-speed random access memory, or may further include a non-volatile memory such as at least one magnetic disk memory, a flash memory, or a universal flash storage (universal flash storage, UFS). The acceleration sensor 280E may periodically acquire acceleration data of the electronic device according to a specific frequency. For example, magnitudes of accelerations on various directions (which are generally three directions: an X axis, a Y axis, and a Z axis) of the electronic device may be acquired.

Certainly, it may be understood that FIG. 2 only shows an exemplary description when the electronic device is in a form of a mobile phone. When the electronic device is in a form of another device such as a tablet computer, a handheld computer, a PC, a PDA, or a wearable device (for example, a smart watch, a smart bracelet), a structure of the electronic device may include fewer structures than those shown in FIG. 2, or more structures than those shown in FIG. 2, and is not limited herein.

It may be understood that, generally speaking, implementations of functions of the electronic device require cooperation of software in addition to support of hardware.

A software system of the electronic device may use a layered architecture, an event-driven architecture, a microkernel architecture, a micro service architecture, or a cloud architecture. In embodiments of this application, a software structure of the electronic device is described by using an Android system with a layered architecture as an example.

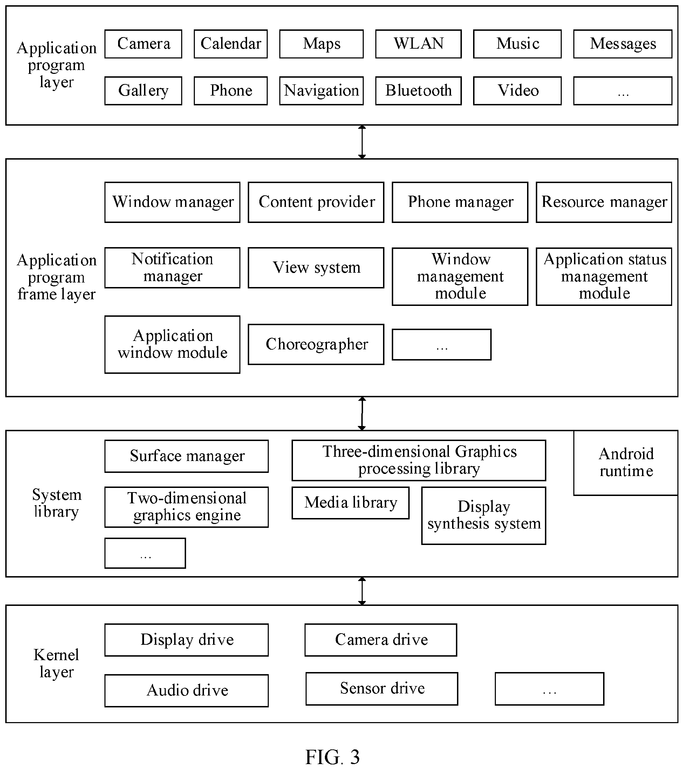

FIG. 3 is a block diagram of a software structure of an electronic device according to an embodiment of this application.

In a layered architecture, software is divided into several layers, and each layer has a clear role and task. The layers communicate with each other through a software interface. In some embodiments, the Android system is divided into four layers that are respectively an application program layer, an application program framework layer, an Android runtime (Android runtime) and system library (which may also be referred to as a native layer), and a kernel layer from top to bottom.

The application program layer may include a series of application program packages. As shown in FIG. 3, the application program packages may include application programs such as camera, gallery, calendar, phone, maps, navigation, WLAN, Bluetooth, music, video, SMS messages, and the like. In some examples, application programs included in the application program layer may be foreground application programs (that is, running in the foreground of the electronic device, where the foreground application programs can directly interact with a user) or background application programs (that is, running in the background of the electronic device, where the background application programs cannot directly interact with the user).

The application program framework layer provides an application programming interface (application programming interface, API) and a programming framework for application programs at the application program layer. The application program framework layer includes some predefined functions.

As shown in FIG. 3, the application program framework layer may include a window manager, a content provider, a view system, a phone manager, a resource manager, a notification manager, and the like.

The window manager is configured to manage a window application. The window manager may acquire a size of the display screen, determine whether there is a status bar, perform screen locking, take a screenshot of a screen, and the like.

The content provider is configured to store and obtain data, and make the data accessible to an application program. The data may include a video, an image, audio, calls that are made and answered, a browsing history and a bookmark, a phonebook, and the like.

The view system includes visual controls such as a control for displaying a text and a control for displaying a picture. The view system may be configured to construct an application program. A display interface may include one or more views. For example, a display interface including a short message notification icon may include a view for displaying a text and a view for displaying a picture.

The phone manager is configured to provide a communication function of the electronic device, for example, call status management (including connected, hang-up, and the like).

The resource manager provides various resources such as a localized character string, an icon, a picture, a layout file, and a video file for an application program.

The notification manager enables an application program to display notification information in the status bar that may be used to convey a message of a notification type, where the message may disappear automatically after a short stay without user interaction. For example, the notification manager is configured to provide a notification of download completion, a message notification, and the like. The notification manager may alternatively be a notification that appears on a top status bar of a system in the form of a graph or a scroll bar text, for example, a notification of an application program running in the background, or may be a notification that appears on the screen in the form of a dialog window. For example, text information is prompted in the status bar, a prompt tone is made, the electronic device vibrates, or an indicator light flashes.

As shown in FIG. 3, to implement the image drawing method provided in embodiments of this application, the application program framework layer may further include a window management module, an application status management module, an application window module corresponding to an application program, a choreographer corresponding to the application program, and the like. The window management module may be a system window system of a native android system, and the window system serves a core of the native android system. The window management module may be configured to monitor switching of a window of an application program to the background of the electronic device. After the window management module detects that the window of the application program is switched to the background, the window management module may send, to the application status management module, a notification that the window of the application program is switched to the background.

The window management module may be further configured to monitor switching of the window of the application program to the foreground of the electronic device. After the window management module detects that the window of the application program is switched to the foreground, the window management module may send, to the application status management module, a notification that the window of the application program is switched to the foreground. The application status management module may be configured to receive the notification that the window is switched to the background sent by the window management module. After the application status management module receives the notification that the window is switched to the background sent by the window management module, the application status management module may determine whether all windows of the application program are background windows. When the application status management module determines that all the windows of the application program are the background windows, the application status management module may send, to a display synthesis system (that is, a surface module) included in a system library of the electronic device, a notification that the application program is switched to a background application program, so that the display synthesis system can reduce a frequency of sending a vertical synchronization signal to the choreographer corresponding to the application program.

The application status management module may be further configured to receive the notification that the window is switched to the foreground sent by the window management module. After the application status management module receives the notification that the window is switched to the foreground sent by the window management module, the application status management module may send, to the display synthesis system included in the system library of the electronic device, a notification that the application program is switched to a foreground application program, so that the display synthesis system can restore the frequency of sending a vertical synchronization signal to the choreographer corresponding to the application program.

The choreographer corresponding to the application program may receive the vertical synchronization signal sent by the display synthesis system, thereby executing drawing based on the vertical synchronization signal sent by the display synthesis system.

The application window module corresponding to the application program may be configured to monitor whether the window of the application program is switched to the background of the electronic device. When the application window module detects that the window of the application program is switched to the background of the electronic device, the application window module may send, to the window management module, the notification that the window of the application program is switched to the background.

The window management module may be further configured to receive the notification that the window of the application program is switched to the background sent by the application window module. When the window management module receives the notification that the window of the application program is switched to the background sent by the application window module, the window management module may determine whether all the windows of the application program are the background windows. When the window management module determines that all the windows of the application program are the background windows, the window management module may send, to the application window module, the notification that the application program is switched to the background application program.

When the application window module receives the notification that the application program is switched to the background application program sent by the window management module, the application window module may send, to the choreographer, the notification that the application program is switched to the background application program.

The choreographer corresponding to the application program may be further configured to receive the notification that the application program is switched to the background application program sent by the application window module. When the choreographer receives the notification that the application program is switched to the background application program sent by the application window module, the choreographer corresponding to the application program may reduce a frame rate of drawing an interface or dynamic effect corresponding to the background application program.

The application window module corresponding to the application program may be further configured to monitor whether the window of the application program is switched to the foreground of the electronic device. When the application window module detects that the window of the application program is switched to the foreground of the electronic device, the application window module may send, to the choreographer corresponding to the application program, the notification that the window of the application program is switched to the foreground, so that the choreographer corresponding to the application program can restore a frame rate of drawing an interface or dynamic effect corresponding to the background application program.

The Android runtime (Android runtime) includes a core library and a virtual machine. The Android runtime Android runtime is responsible for scheduling and management of the Android system.

The core library includes two parts: One part is a performance function that the Java language needs to invoke, and the other part is a core library of Android^{®}.

The application program layer and the application program framework layer are run in the virtual machine. The virtual machine executes Java files of the application program layer and the application program framework layer as binary files. The virtual machine is configured to execute functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), a two-dimensional graphics engine (for example, SGL).

The surface manager is configured to manage a display subsystem, and provide fusion of two-dimensional and three-dimensional layers to a plurality of application programs.

The media library supports playback and recording in a plurality of common audio and video formats, and also supports a static image file, and the like. The media library may support a plurality of audio and video encoding formats.

The three-dimensional graphics processing library is configured to implement three-dimensional graphics drawing, image rendering, synthesis, layer processing, and the like.

The two-dimensional graphics engine is a drawing engine for two-dimensional drawing.

As shown in FIG. 3, the system library may further include a display synthesis system (that is, a surface module).

The display synthesis system may be configured to send a vertical synchronization signal request to hardware of the electronic device, in other words, the display synthesis system may report a request for a vertical synchronization signal to hardware of the electronic device. In other words, the display synthesis system may be configured to receive a request from the choreographer corresponding to the application program, and distribute a vertical synchronization signal to the application program in response to the request. The vertical synchronization signal may be generated through simulation by software or generated by the hardware of the electronic device. For example, the vertical synchronization signal may be generated by a hardware composer (Hardware Composer, HWC). The display synthesis system may report the request for the vertical synchronization signal to the hardware of the electronic device (that is, the hardware composer). After generating the vertical synchronization signal, the HWC may send the vertical synchronization signal to the display synthesis system by using a callback method. In this way, the display synthesis system can forward the vertical synchronization signal to the choreographer corresponding to the application program. After receiving the vertical synchronization signal sent by the display synthesis system, the choreographer corresponding to the application program may start to execute a corresponding drawing operation.

The display synthesis system may be configured to receive the notification that the application program is switched to the background application program sent by the application status management module. When the display synthesis system receives the notification that the application program is switched to the background application program sent by the application status management module, the display synthesis system may reduce the frequency of sending the vertical synchronization signal to the choreographer corresponding to the application program. The display synthesis system is configured to receive requests from choreographers of different application programs and distribute vertical synchronization signals to the application programs in response to the requests. The vertical synchronization signal may be generated through the simulation by the software or generated by the hardware of the electronic device. For example, the vertical synchronization signal may be generated by the hardware composer (Hardware Composer, HWC). After generating the vertical synchronization signal, the HWC may send the vertical synchronization signal to SurfaceFlinger by using the callback method. Therefore, SurfaceFlinger can forward the vertical synchronization signal to the choreographer corresponding to the application program. After receiving the vertical synchronization signal sent by SurfaceFlinger, the choreographer corresponding to the application program starts to execute the drawing operation.

The display synthesis system may be further configured to receive the notification that the application program is switched to the foreground application program sent by the application status management module. When the display synthesis system receives the notification that the application program is switched to the foreground application program sent by the application status management module, the display synthesis system may restore the frequency of sending the vertical synchronization signal to the choreographer corresponding to the application program. The display synthesis system may be further configured to receive the vertical synchronization signal sent by the hardware of the electronic device, and send the received vertical synchronization signal to the choreographer corresponding to the application program.

The kernel layer is a layer between hardware and software. The kernel layer includes at least a display drive, a camera drive, an audio drive, and a sensor drive.

Methods in the following embodiments may all be implemented in the electronic device having the foregoing hardware structure or software structure.

In some examples, when the application program of the electronic device is in the background of the electronic device, the electronic device may reduce the frequency at which the display synthesis system sends the vertical synchronization signal to the choreographer corresponding to the background application program. Therefore, the frame rate of drawing the interface or the dynamic effect corresponding to the background application program by the choreographer corresponding to the background application program can be reduced, that is, the frequency at which the choreographer corresponding to the background application program executes an image drawing operation corresponding to the background application program is reduced.

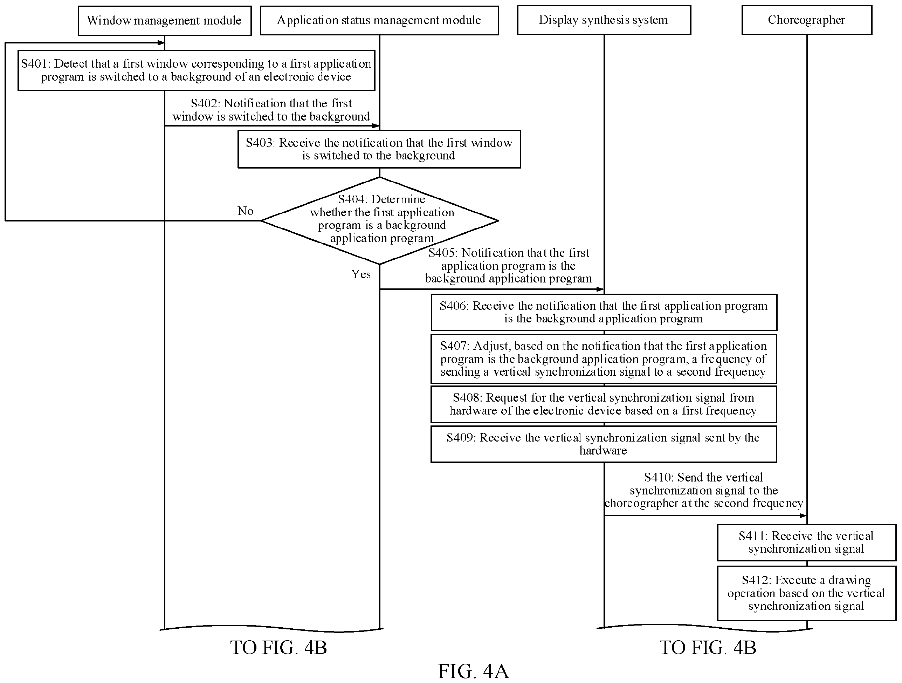

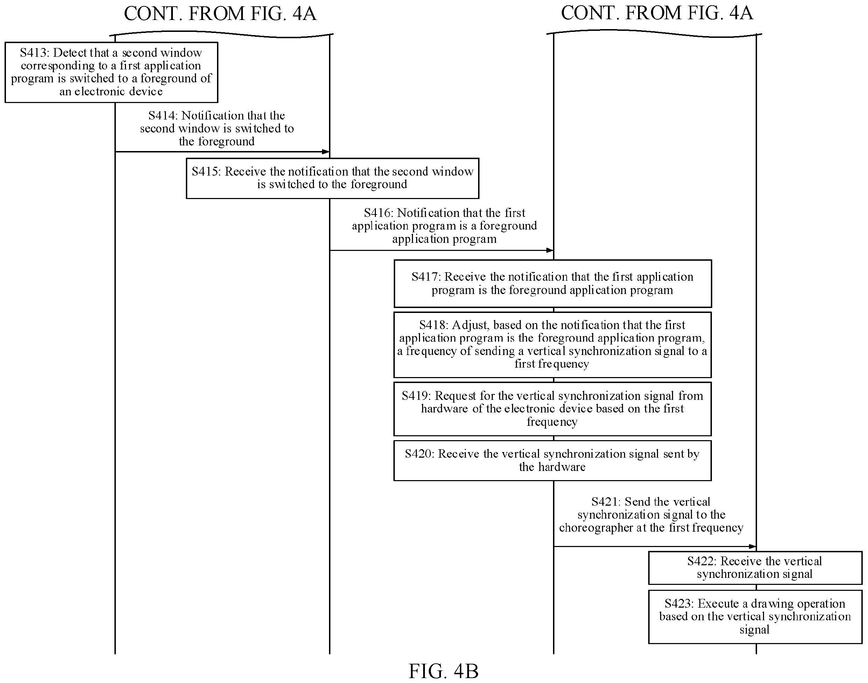

With reference to FIG. 4A and FIG. 4B, an image drawing method according to an embodiment of this application is described in detail below. FIG. 4A and FIG. 4B are a schematic flowchart of an image drawing method according to an embodiment of this application. As shown in FIG. 4A and FIG. 4B, the image drawing method may include S401 to S423 below.

S401: A window management module of an electronic device detects that a first window corresponding to a first application program is switched to a background of the electronic device. The electronic device may include a plurality of application programs, for example, a music application program and a video application program. After the electronic device runs the first application program, the electronic device may run the first application program in a foreground, in other words, the electronic device may display a window corresponding to the first application program, so that the foreground application program can directly interact with a user. The electronic device may alternatively run the first application program in the background, in other words, the electronic device does not display a window corresponding to the first application program, so that the background application program cannot directly interact with a user. It should be noted that, the electronic device may switch the first application program running in the foreground to the background of the electronic device, and the electronic device may alternatively switch the first application program running in the background to the foreground of the electronic device.

In some examples, the first application program may be any one of the plurality of application programs included in the electronic device, or may be a plurality of application programs among the plurality of application programs included in the electronic device. This is not limited in this embodiment of this application.

After the electronic device runs the first application program, the first application program may include one or more windows, so that the electronic device can display the window corresponding to the first application program and directly interact with the user through the window corresponding to the first application program.

In some examples, windows corresponding to the first application program may include different types of windows. For example, the windows corresponding to the first application program may include an activity type window (that is, an Activity type window), a view type window (that is, a View type window), and a wallpaper type window.

It should be noted that, when the first application program runs in the foreground of the electronic device, in other words, the first application program is the foreground application program, the electronic device may display the window corresponding to the first application program, and the window corresponding to the first application program may be one of the activity type window, the view type window, or the wallpaper type window, or the first application program may correspond to a plurality of types of windows.

When the first application program runs in the background of the electronic device, in other words, the first application program is a background application program, the electronic device does not display the window corresponding to the first application program. In this case, the electronic device may switch the first application program from the background to the foreground. When the electronic device switches the first application program from the background to the foreground, the electronic device may switch an activity type window corresponding to the first application program to the foreground (that is, pull up the activity type window), or may switch a view type window or a wallpaper type window corresponding to the first application program to the foreground. That is, whether the first application program is in the foreground of the electronic device may be determined based on whether the window corresponding to the first application program is in the foreground of the electronic device. To be specific, when all windows corresponding to the first application program are in the background of the electronic device, it may be determined that the first application program is in the background of the electronic device, and when one or more windows of the window corresponding to the first application program are in the foreground of the electronic device, it may be determined that the first application program is in the foreground of the electronic device.

The window management module of the electronic device may manage the window corresponding to the first application program, for example, manage life cycles of different types of windows. Therefore, the window management module of the electronic device can monitor different types of windows, monitor whether the window is in the foreground of the electronic device or the background of the electronic device, and whether the window is switched from the foreground of the electronic device to the background of the electronic device.

For example, a life cycle of the activity type window may include starting (that is, start) scheduling, pausing (that is, pause) scheduling, stopping (that is, stop) scheduling, destroying (that is, destroy) scheduling, creating a corresponding window object, destructing a window object, requesting a layer, and refreshing layer drawing. A life cycle of the view type window may include creating a corresponding window object, destructing a window object, requesting a layer, and refreshing layer drawing. A life cycle of the wallpaper type window may include creating a window object, destructing a window object, and content visibility and invisibility. The window management module of the electronic device may manage the life cycle of the activity type window or the life cycle of the view type window, so that the window management module can monitor the activity type window or the view type window, and monitor whether the window is switched from the foreground of the electronic device to the background of the electronic device. For example, when the window management module of the electronic device receives activity stop callback corresponding to the first application program, the window management module of the electronic device may determine and detect that the activity type window corresponding to the first application program is switched to the background.

To be specific, after the electronic device runs the first application program, the window management module of the electronic device may monitor windows (that is, different types of windows) corresponding to the first application program, thereby monitoring whether the window corresponding to the first application program is in the foreground of the electronic device or in the background of the electronic device, and whether the window is switched from the foreground of the electronic device to the background of the electronic device.

When the window management module of the electronic device detects that the first window corresponding to the first application program (which may also be referred to as a component corresponding to the first application program) is switched to the background of the electronic device, the electronic device may continue to determine whether the first application program is the background application program. Therefore, when it is determined that the first application program is the background application program, a frame rate of drawing an interface or dynamic effect corresponding to the first application program can be reduced, and a waste of a system resource of the electronic device can be avoided. That is, when the window management module of the electronic device detects that the first window corresponding to the first application program is switched to the background of the electronic device, the electronic device may continue to execute the following solution.

It should be noted that, the first window may be one window among windows corresponding to the first application program, or the first window may be a plurality of windows among windows corresponding to the first application program. This is not limited in this embodiment of this application.

S402: The window management module of the electronic device sends, to an application status management module, a notification that the first window is switched to the background.

When the window management module of the electronic device detects that the first window corresponding to the first application program is switched to the background of the electronic device, the window management module of the electronic device may send, to the application status management module of the electronic device, the notification that the first window is switched to the background. Therefore, the application status management module can determine whether the first application program is the background application program based on the notification that the first window is switched to the background.

In some examples, the notification that the first window is switched to the background may include an identifier of the first application program. Therefore, the application status management module can determine whether the first application program is the background application program based on the identifier of the first application program.

S403: The application status management module of the electronic device receives the notification that the first window is switched to the background.

S404: The application status management module of the electronic device determines whether the first application program is the background application program.

After the application status management module of the electronic device receives the notification that the first window is switched to the background, the electronic device may determine whether the first application program is the background application program based on the notification that the first window is switched to the background.

In some examples, that the application status management module of the electronic device determines whether the first application program is the background application program may include: The application status management module of the electronic device determines whether all the windows corresponding to the first application program are background windows. A background window is a window in the background of the electronic device. The electronic device does not display the window, and the electronic device cannot interact with the user through the window. Correspondingly, a foreground window is a window in the foreground of the electronic device. The electronic device displays the window, and the electronic device can interact with the user through the window.

When the application status management module of the electronic device determines that all the windows corresponding to the first application program are the background windows, the application status management module of the electronic device may determine that the first application program is the background application program. When the application status management module of the electronic device determines that a foreground window exists in the windows corresponding to the first application program, the application status management module of the electronic device may determine that the first application program is the foreground application program.

In some examples, when the notification that the first window is switched to the background includes the identifier of the first application program, the application status management module of the electronic device may determine whether the first application program is the background application program based on the identifier of the first application program, that is, the application status management module of the electronic device may determine whether all the windows corresponding to the first application program are the background windows based on the identifier of the first application program.

In a case in which the application status management module of the electronic device determines that the first application program is the background application program, the application status management module of the electronic device may send, to a display synthesis system, a notification that the first application program is the background application program, that is, the electronic device may continue to perform S405 described below. When the application status management module of the electronic device determines that the first application program is not the background application program, the application status management module of the electronic device may not send, to the display synthesis system, the notification that the first application program is the background application program, and the electronic device may continue to monitor whether the first window corresponding to the first application program is switched to the background of the electronic device, so that the electronic device can continue to perform S401 to S405 described above.

In some examples, in the case in which the application status management module of the electronic device determines that the first application program is the background application program, the application status management module of the electronic device may further record the identifier of the first application program into a background application program list, to manage the background application program through the background application program list. The identifier of the first application program may be a package name of the first application program or may be a user identification (user identification, UID) of the first application program. This is not limited in this embodiment of this application.

That the application status management module of the electronic device manages the background application program through the background application program list may include: When the window corresponding to the application program is switched to the foreground of the electronic device, the application status management module of the electronic device may inquire whether the identifier of the application program is in the background application program list. If the identifier of the application program is in the background application program list, the application status management module of the electronic device may send a notification to the display synthesis system to restore a frequency of reporting a request for a vertical synchronization signal to hardware of the electronic device.

In some examples, the application status management module may further delete an identifier of a background application program in the background application program list. For example, an interface for clearing an identifier of a background application program in the background application program list may be further arranged for the application status management module. The window management module may call this interface when background application programs crash (that is, crash) or a system of the electronic device recycles the background application program. In this way, the application status management module can update the background application program list, so that a case in which the application program has stopped running but the identifier of the background application program still exists in the background application program list, causing the application status management module to frequently interact with the display synthesis system based on the identifier of the background application program is avoided.

In some examples, that the application status management module of the electronic device determines whether the first application program is the background application program may include: encapsulating a pair of interfaces in the application status management module for monitoring whether the first application program exits the background or is switched to the foreground, that is, monitoring whether the window corresponding to the first application program exits the background or is switched to the foreground through the interfaces. A call point of this pair of interfaces may be in a window system (that is, the window management module) of the electronic device, and in Activity or Window lifecycle callback. For example, when the window corresponding to the first application program exits the background (that is, is switched to the foreground), the call point is in the Activity lifecycle callback, which may be that the call point is in an interface corresponding to stop callback in an Activity life cycle. The call point may alternatively be in invisible callback requested by an application program corresponding to Wallpaper (that is, Wallpaper).

S405: The application status management module of the electronic device sends, to the display synthesis system, the notification that the first application program is the background application program.

When the application status management module of the electronic device determines that the first application program is the background application program, the application status management module of the electronic device may send, to the display synthesis system, the notification that the first application program is the background application program, so that the display synthesis system of the electronic device can determine a frequency of requesting for the vertical synchronization signal.

S406: The display synthesis system of the electronic device receives the notification that the first application program is the background application program.

In some examples, the notification that the first application program is the background application program may include the identifier of the first application program, that is, may include the package name of the first application program or may include the UID of the first application program. This is not limited in this embodiment of this application.

S407: The display synthesis system of the electronic device adjusts, based on the notification that the first application program is the background application program, a frequency of sending the vertical synchronization signal to a second frequency.

After the display synthesis system of the electronic device receives the notification that the first application program is the background application program, the display synthesis system of the electronic device may adjust, based on the notification that the first application program is the background application program, the frequency of sending the vertical synchronization signal to a choreographer corresponding to the application program to the second frequency. The second frequency is a frequency at which the display synthesis system sends the vertical synchronization signal to the choreographer corresponding to the application program when the first application program is the background application program.

The second frequency may be less than a first frequency. The first frequency may be a preset frequency, for example, the first frequency may be a frequency at which the display synthesis system sends a vertical synchronization signal to the choreographer corresponding to the application when the first application program is the foreground application program. Because the display synthesis system of the electronic device may send the vertical synchronization signal to the choreographer corresponding to the application program at the first frequency, that is, when the display synthesis system sends the vertical synchronization signal to the choreographer corresponding to the application program at the first frequency, the frequency at which the display synthesis system requests for the vertical synchronization signal from the hardware of the electronic device is also the first frequency.

In some examples, the second frequency may be one frequency or a plurality of frequencies. When the second frequency is one frequency, that is, when different application programs are background application programs, frequencies determined by the display synthesis system of the electronic device to send vertical synchronization signals to choreographers corresponding to the application programs are all the same.

When the second frequency is a plurality of frequencies, that is, when different application programs are background application programs, frequencies determined by the display synthesis system of the electronic device to send vertical synchronization signals to choreographers corresponding to the application programs may be different. That is, when the different application programs are the background application programs, the different application programs correspond to different second frequencies. The display synthesis system of the electronic device may pre-store a correspondence between the identifier of the application program and the frequency of sending the vertical synchronization signal to the choreographer corresponding to the application program. Therefore, the frequency of sending the vertical synchronization signal corresponding to the identifier of the application program to the choreographer corresponding to the application program can be determined based on the correspondence between the identifier of the application program and the frequency of sending the vertical synchronization signal to the choreographer corresponding to the application program. For example, when the first frequency is a plurality of frequencies, the display synthesis system of the electronic device determines, based on the identifier of the first application program included in the notification that the first application program is the background application program, the second frequency that is of sending the vertical synchronization signal to the choreographer corresponding to the application program and that corresponds to the first application program.

S408: The display synthesis system of the electronic device requests for the vertical synchronization signal from the hardware of the electronic device based on the first frequency.

After the display synthesis system of the electronic device adjusts the frequency of sending the vertical synchronization signal to the choreographer corresponding to the application program to the second frequency, the display synthesis system of the electronic device may request for the vertical synchronization signal from the hardware of the electronic device based on the first frequency of requesting the vertical synchronization signal.

For example, the display synthesis system of the electronic device may send the request for the vertical synchronization signal to a hardware composer HWC of the electronic device at the preset first frequency. After the HWC generates the vertical synchronization signal, the HWC may send the vertical synchronization signal to the display synthesis system of the electronic device by using a callback method. After the HWC generates the vertical synchronization signal, a frequency at which the HWC sends the vertical synchronization signal to the display synthesis system of the electronic device is the same as the frequency at which the display synthesis system sends the request for the vertical synchronization signal to the HWC, that is, the frequency at which the HWC sends the vertical synchronization signal to the display synthesis system of the electronic device is also the first frequency.

S409: The display synthesis system of the electronic device receives the vertical synchronization signal sent by the hardware.

S410: The display synthesis system of the electronic device sends the vertical synchronization signal to the choreographer at the second frequency.

After the display synthesis system of the electronic device receives the vertical synchronization signal sent by the hardware of the electronic device, the display synthesis system of the electronic device may send the vertical synchronization signal to the choreographer corresponding to the application program of the electronic device (that is, the choreographer corresponding to the first application program) at the second frequency, so that the choreographer corresponding to the application program of the electronic device can execute a corresponding drawing operation based on the vertical synchronization signal.

S411: The choreographer of the electronic device receives the vertical synchronization signal.

S412: The choreographer of the electronic device executes the drawing operation based on the vertical synchronization signal.

After the choreographer corresponding to the application program of the electronic device receives the vertical synchronization signal sent by the display synthesis system, the choreographer corresponding to the application program of the electronic device may execute the corresponding drawing operation based on the vertical synchronization signal, that is, the choreographer corresponding to the application program may execute the corresponding drawing operation, for example, drawing an interface or dynamic effect corresponding to the first application program. Because the frequency at which the HWC sends the vertical synchronization signal to the display synthesis system of the electronic device is the same as the frequency at which the display synthesis system sends the request for the vertical synchronization signal to the HWC, that is, the frequency at which the HWC sends the vertical synchronization signal to the display synthesis system of the electronic device is also the first frequency, a frequency of receiving the vertical synchronization signal by the choreographer corresponding to the application program of the electronic device is also the first frequency. Therefore, when the choreographer corresponding to the application program of the electronic device executes the drawing operation at the second frequency based on the vertical synchronization signal, because the second frequency is less than the first frequency, a frame rate of drawing corresponding to the first application program is reduced when the first application program is the background application program.

S413: The window management module of the electronic device detects that a second window corresponding to the first application program is switched to the foreground of the electronic device.

When the first application program is the background application program, that is, the windows corresponding to the first application program are all the background windows, the window management module of the electronic device may continue to monitor whether the second window corresponding to the first application program is switched to the foreground of the electronic device. The second window may be one or more of the windows corresponding to the first application program. The second window may be the same as the first window or may be different from the first window. This is not limited in this embodiment of this application.

When the window management module of the electronic device detects that the second window corresponding to the first application program is switched to the foreground of the electronic device, the electronic device may determine that the first application program is the foreground application program. Therefore, the electronic device can restore, to the first frequency, the frequency at which the display synthesis system requests for the vertical synchronization signal from the hardware of the electronic device, that is, a frequency at which the display synthesis system requests for the vertical synchronization signal from the hardware of the electronic device when the first application program is the foreground application program.

For a specific embodiment in which the window management module of the electronic device detects that the second window corresponding to the first application program is switched to the foreground of the electronic device in this embodiment of this application, refer to S401 described above. Details are not described herein again in this embodiment of this application.

S414: The window management module of the electronic device sends, to the application status management module, a notification that the second window is switched to the foreground.

When the window management module of the electronic device detects that the second window corresponding to the first application program is switched to the foreground of the electronic device, the window management module of the electronic device may send, to the application status management module of the electronic device, the notification that the second window is switched to the foreground.

In some examples, the notification that the second window is switched to the foreground may include the identifier of the first application program. Therefore, the application status management module can determine whether the first application program is a background application program in the background application program list based on the identifier of the first application program.

S415: The application status management module of the electronic device receives the notification that the second window is switched to the foreground.

S416: The application status management module of the electronic device sends, to the display synthesis system, the notification that the first application program is the foreground application program.

After the application status management module of the electronic device receives the notification that the second window is switched to the foreground, the application status management module of the electronic device may send, to the display synthesis system, the notification that the first application program is the foreground application program. Therefore, the display synthesis system of the electronic device adjusts, based on the notification that the first application program is the foreground application program, the frequency of requesting for the vertical synchronization signal to the first frequency.

In some examples, before the application status management module of the electronic device sends, to the display synthesis system, the notification that the first application program is the foreground application program, the application status management module may determine whether the first application program is the background application program in the background application program list based on the identifier of the first application program included in the notification that the second window is switched to the background.

When the first application program is the background application program in the background application program list, the electronic device may determine that the first application program is switched from the background of the electronic device to the foreground of the electronic device. When the first application program is the background application program, a corresponding frequency of requesting for the vertical synchronization signal is the second frequency. However, when the first application program is the foreground application program, a corresponding frequency of requesting for the vertical synchronization signal needs to be adjusted to the first frequency. Therefore, when the first application program is the background application program in the background application program list, the application status management module of the electronic device can send, to the display synthesis system, the notification that the first application program is the foreground application program. In this way, the display synthesis system of the electronic device adjusts, based on the notification that the first application program is the foreground application program, the frequency of requesting for the vertical synchronization signal to the first frequency.

When the first application program is not the background application program in the background application program list, the electronic device may determine that the first application program is not switched from the background of the electronic device to the foreground of the electronic device. The first application program may be a newly started application program. For the newly started application program, a corresponding frequency of requesting for the vertical synchronization signal is the first frequency. Therefore, when the first application program is not the background application program in the background application program list, the application status management module of the electronic device may not send, to the display synthesis system, the notification that the first application program is the foreground application program, so that the display synthesis system of the electronic device requests for the vertical synchronization signal based on the first frequency by default.

S417: The display synthesis system of the electronic device receives the notification that the first application program is the foreground application program.

S418: The display synthesis system of the electronic device adjusts, based on the notification that the first application program is the foreground application program, the frequency of sending the vertical synchronization signal to the first frequency.

After the display synthesis system of the electronic device receives the notification that the first application program is the foreground application program, the display synthesis system of the electronic device may adjust, based on the notification that the first application program is the foreground application program, the frequency of sending the vertical synchronization signal to the choreographer corresponding to the application program to the first frequency.

In some examples, the first frequency may be one frequency or a plurality of frequencies. When the first frequency is one frequency, that is, when different application programs are foreground application programs, frequencies determined by the display synthesis system of the electronic device to send vertical synchronization signals to choreographers corresponding to the application programs are all the same.

When the first frequency is a plurality of frequencies, that is, when different application programs are foreground application programs, frequencies determined by the display synthesis system of the electronic device to send vertical synchronization signals to choreographers corresponding to the application programs may be different. That is, when the different application programs are the foreground application programs, the different application programs correspond to different first frequencies. The display synthesis system of the electronic device may pre-store a correspondence between the identifier of the application program and the frequency of sending the vertical synchronization signal to the choreographer corresponding to the application program. Therefore, the frequency of sending the vertical synchronization signal corresponding to the identifier of the application program to the choreographer corresponding to the application program can be determined based on the correspondence between the identifier of the application program and the frequency of sending the vertical synchronization signal to the choreographer corresponding to the application program.

For example, when the first frequency is a plurality of frequencies, the display synthesis system of the electronic device determines, based on the identifier of the first application program included in the notification that the first application program is the foreground application program, the first frequency that is of sending the vertical synchronization signal to the choreographer corresponding to the application program and that corresponds to the first application program.

S419: The display synthesis system of the electronic device requests for the vertical synchronization signal from the hardware of the electronic device based on the first frequency.

After the display synthesis system of the electronic device adjusts the frequency of sending the vertical synchronization signal to the choreographer corresponding to the application program to the first frequency, the display synthesis system of the electronic device may request for the vertical synchronization signal from the hardware of the electronic device based on the first frequency of sending the vertical synchronization signal to the choreographer corresponding to the application program.

S420: The display synthesis system of the electronic device receives the vertical synchronization signal sent by the hardware.

S421: The display synthesis system of the electronic device sends the vertical synchronization signal to the choreographer at the first frequency.

After the display synthesis system of the electronic device receives the vertical synchronization signal sent by the hardware of the electronic device, the display synthesis system of the electronic device may send the vertical synchronization signal to the choreographer corresponding to the application program of the electronic device at the first frequency, so that the choreographer corresponding to the application program of the electronic device can execute the corresponding drawing operation based on the vertical synchronization signal.

S422: The choreographer of the electronic device receives the vertical synchronization signal.

S423: The choreographer of the electronic device executes the drawing operation based on the vertical synchronization signal.

After the choreographer corresponding to the application program of the electronic device receives the vertical synchronization signal sent by the display synthesis system, the choreographer corresponding to the application program of the electronic device may execute the corresponding drawing operation based on the vertical synchronization signal, that is, the choreographer corresponding to the application program may execute the corresponding drawing operation, for example, drawing the interface or the dynamic effect corresponding to the first application program.

Because the frequency at which the HWC sends the vertical synchronization signal to the display synthesis system of the electronic device is the same as the frequency at which the display synthesis system sends the request for the vertical synchronization signal to the HWC, that is, the frequency at which the HWC sends the vertical synchronization signal to the display synthesis system of the electronic device is also the first frequency, a frequency of receiving the vertical synchronization signal by the choreographer corresponding to the application program of the electronic device is also the first frequency. Therefore, the frequency at which the choreographer corresponding to the application program of the electronic device executes the drawing operation based on the vertical synchronization signal is also the first frequency. That is, when the first application program is the background application program, the frame rate of drawing corresponding to the first application program is the first frequency.

According to the solution of this application, when the first window of the first application program of the electronic device is switched to the background of the electronic device, the electronic device may determine whether all the windows of the first application program are the background windows. When it is determined that all the windows of the first application program are the background windows, it may be determined that the first application program is the background application program. When the first application program is the background application program, the electronic device may reduce the frequency at which the display synthesis system sends the vertical synchronization signal to the choreographer corresponding to the background application program. Therefore, the frequency of receiving the vertical synchronization signal by the choreographer corresponding to the background application program of the electronic device can be reduced, and the frame rate of drawing the interface or the dynamic effect corresponding to the background application program can be reduced. In this way, a waste of a system resource of the electronic device can be reduced, for example, a waste of a resource of a CPU of the electronic device is avoided, thereby reducing power consumption of the electronic device.

When the second window of the first application program is switched to the foreground of the electronic device, the electronic device may determine that the first application program is the foreground application program, and the electronic device may restore the frequency at which the display synthesis system sends the vertical synchronization signal to the choreographer corresponding to the application program, and can restore the frequency of receiving the vertical synchronization signal by the choreographer corresponding to the application program of the electronic device, and restore the frame rate of drawing the interface or the dynamic effect corresponding to the foreground application program, thereby not affecting use experience of the first application program.

In some other embodiments, when the application program of the electronic device is in the background of the electronic device, the electronic device may reduce the frame rate of drawing the interface or the dynamic effect corresponding to the background application program by the choreographer corresponding to the background application program, that is, reduce the frequency of executing the image drawing operation corresponding to the background application program by the choreographer corresponding to the background application program.

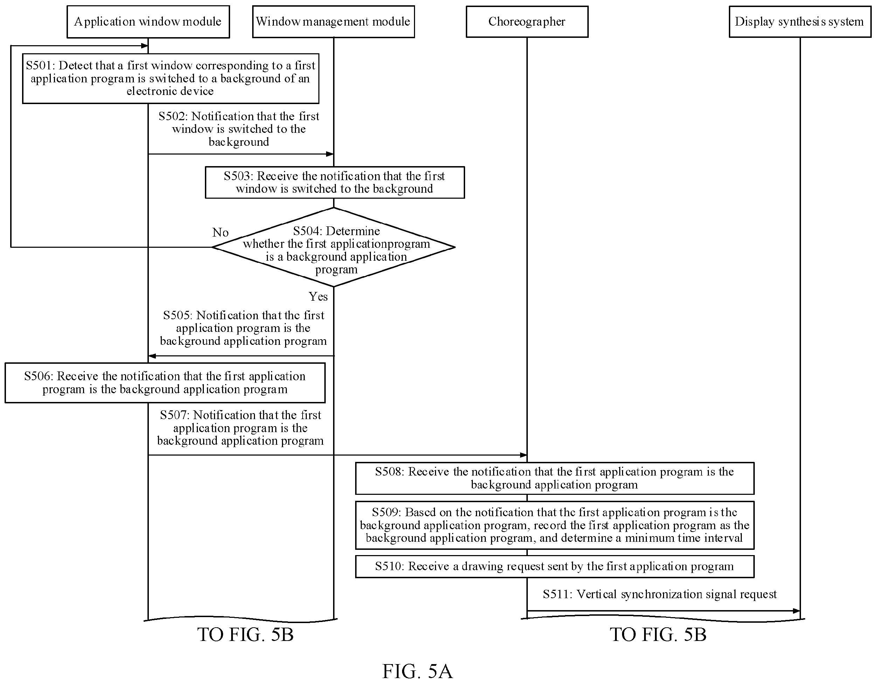

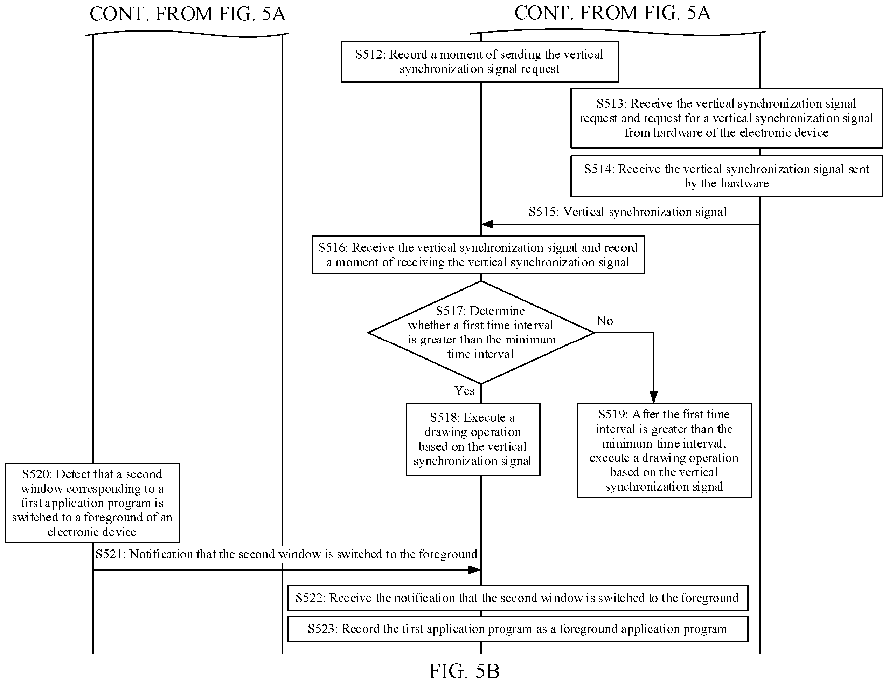

With reference to FIG. 5A and FIG. 5B, another image drawing method according to an embodiment of this application is described in detail below. FIG. 5A and FIG. 5B are a schematic flowchart of another image drawing method according to an embodiment of this application. As shown in FIG. 5A and FIG. 5B, the image drawing method may include S501 to S523 below.

S501: An application window module of an electronic device detects that a first window corresponding to a first application program is switched to a background of the electronic device.

After the electronic device runs the first application program, the application window module of the electronic device may monitor whether the first window corresponding to the first application program is switched to the background of the electronic device. The first window may be a window corresponding to the first application program.

The application window module of the electronic device may be a module corresponding to the first application program, and is configured to monitor whether a window corresponding to the first application program is switched to the background of the electronic device. The application window module of the electronic device may alternatively be a module corresponding to a plurality of application programs included in the electronic device, and is configured to monitor whether windows corresponding to the plurality of application programs are switched to the background of the electronic device.

The application window module of the electronic device may be an application window module corresponding to the first application program. That is, the application window module corresponding to the first application program may monitor whether the first window corresponding to the first application program is switched to the background of the electronic device.

When the application window module of the electronic device detects that the first window corresponding to the first application program is switched to the background of the electronic device, the application window module of the electronic device sends, to a window management module, a notification that the first window is switched to the background. When the application window module of the electronic device does not detect that the first window corresponding to the first application program is switched to the background of the electronic device, the application window module of the electronic device may continue to monitor the window of the first application program.

S502: The application window module of the electronic device sends, to the window management module, the notification that the first window is switched to the background.

When the application window module of the electronic device detects that the first window corresponding to the first application program is switched to the background of the electronic device, the application window module of the electronic device sends, to the window management module, the notification that the first window is switched to the background. Therefore, the window management module can determine whether the first application program is a background application program based on the notification that the first window is switched to the background. In some examples, the notification that the first window is switched to the background may include an identifier of the first application program. Therefore, an application status management module can determine whether the first application program is the background application program based on the identifier of the first application program.

S503: The window management module of the electronic device receives the notification that the first window is switched to the background.

S504: The window management module of the electronic device determines whether the first application program is the background application program.

After the window management module of the electronic device receives the notification that the first window is switched to the background sent by the application window module, the window management module may determine whether the first application program is the background application program based on the notification that the first window is switched to the background. When the window management module of the electronic device determines that the first application program is the background application program, the window management module of the electronic device may send, to the application window module, a notification that the first application program is the background application program, that is, the electronic device may continue to perform S505 described below. When the window management module of the electronic device determines that the first application program is not the background application program, the window management module of the electronic device may send, to the application window module, a notification that the first application program is a foreground application program. Therefore, the electronic device can continue to monitor whether the first window corresponding to the first application program is switched to the background of the electronic device, that is, the electronic device may continue to perform S501 to S504 described above.

In some examples, that the window management module determines whether the first application program is the background application program may include: The window management module may determine whether all windows corresponding to the first application program are background windows. When the window management module of the electronic device determines that all the windows corresponding to the first application program are the background windows, the window management module of the electronic device may determine that the first application program is the background application program. When the window management module of the electronic device determines that a foreground window exists in the windows corresponding to the first application program, the window management module of the electronic device may determine that the first application program is the foreground application program.

For example, the window management system may extend an interface for determining whether the current application program (that is, the first application program) has a visible window or is in the background. In other words, the interface may be configured to determine whether the window of the first application program is a foreground window or a background window. A call point of this interface may be in a handleAppVisbility interface, or a call point of this interface may be in Activity stop callback of the application program.

In some examples, when the notification that the first window is switched to the background includes the identifier of the first application program, the window management module of the electronic device may determine whether the first application program is the background application program based on the identifier of the first application program, that is, the window management module of the electronic device may determine whether all the windows corresponding to the first application program are the background windows based on the identifier of the first application program.

S505: The window management module of the electronic device sends, to the application window module, the notification that the first application program is the background application program. After the window management module of the electronic device determines that the first application program is the background application program, the window management module of the electronic device may send, to the application window module, the notification that the first application program is the background application program. Therefore, the application window module of the electronic device can send, to a choreographer corresponding to the application program (for example, a choreographer corresponding to the first application program), the notification that the first application program is the background application program.

S506: The application window module of the electronic device receives the notification that the first application program is the background application program.

S507: The application window module of the electronic device sends, to the choreographer, the notification that the first application program is the background application program.

After the application window module of the electronic device receives the notification that the first application program is the background application program, the application window module of the electronic device may send, to the choreographer, the notification that the first application program is the background application program, so that the choreographer corresponding to the application program can determine a frequency of executing a drawing operation.

S508: The choreographer of the electronic device receives the notification that the first application program is the background application program.

S509: The choreographer of the electronic device records the first application program as the background application program based on the notification that the first application program is the background application program, and determines a minimum time interval.

After the choreographer corresponding to the application program of the electronic device receives the notification that the first application program is the background application program, the electronic device may record the first application program as the background application program, and determine the minimum time interval (which may also be referred to as preset duration).

In some examples, the choreographer corresponding to the application program of the electronic device is singleton for one application program (that is, a process). Therefore, the choreographer corresponding to the application program of the electronic device manages drawing scheduling of all windows of one application program. The choreographer corresponding to the application program of the electronic device can extend and define three variables. A first variable is mIsHas Visible Window, and the variable may indicate whether an application program has a visible window. That is, whether the application program is a background application program can be determined using this variable. A second variable is mLastRequestTime, and the variable may represent a moment at which an application program last requests for drawing from a choreographer corresponding to the application program, that is, a moment at which an application program requests for postCallback registration from the choreographer corresponding to the application program. A third variable may represent a minimum time interval, that is, a time interval between a moment at which an application program last requests for drawing from a choreographer corresponding to the application program and a moment at which the choreographer corresponding to the application program executes a drawing operation.

After the choreographer corresponding to the application program receives a vertical synchronization signal sent by a display synthesis system, the choreographer corresponding to the application program determines whether the application program is the background application program based on a value of the first variable, that is, mIsHasVisibleWindow. For example, when the value of mIsHasVisibleWindow is false, the choreographer corresponding to the application program may determine that the application program is the background application program, and when the value of mIsHasVisibleWindow is true, the choreographer corresponding to the application program may determine that the application program is the foreground application program. When the application program is the background application program, the choreographer corresponding to the application program executes the drawing operation based on the minimum time interval when the time interval between the moment at which the application program last requests for drawing from the choreographer and the moment at which the choreographer corresponding to the application program executes the drawing operation is greater than the minimum time interval. In this way, an objective of reducing a frame rate of drawing an interface or dynamic effect corresponding to the background application program by the choreographer corresponding to the application program can be achieved.

That is, after the choreographer corresponding to the application program of the electronic device receives the notification that the first application program is the background application program, the electronic device records the first application program as the background application program, and may set the value of the variable mIsHasVisibleWindow to true for the choreographer corresponding to the application program of the electronic device.

In some examples, the minimum time interval is a preset time interval. When the application program is the foreground application program, the minimum time interval may be greater than the time interval between the moment at which the application program last requests for the drawing from the choreographer corresponding to the application program and the moment at which the choreographer corresponding to the application program executes the drawing operation. The minimum time interval may be one time interval or a plurality of time intervals. When the minimum time interval is one time interval, that is, when different application programs are background application programs, minimum time intervals determined by choreographers corresponding to the application programs of the electronic device are the same.

When the minimum time interval is a plurality of time intervals, that is, when different application programs are background application programs, minimum time intervals determined by choreographers corresponding to the application programs of the electronic device may be different. That is, when different application programs are background application programs, the different application programs correspond to different minimum time intervals. The choreographer of the electronic device may pre-store a correspondence between an identifier of the application program and the minimum time interval, so that the minimum time interval corresponding to the identifier of the application program can be determined based on the correspondence between the identifier of the application program and the minimum time interval. For example, when the minimum time interval is a plurality of time intervals, the choreographer corresponding to the application program of the electronic device may determine the minimum time interval corresponding to the first application program based on the identifier of the first application program included in the notification that the first application program is the background application program.

S510: The choreographer of the electronic device receives the drawing request sent by the first application program.

After the choreographer corresponding to the application program of the electronic device records the first application program as the background application program and determines the minimum time interval, the choreographer corresponding to the application program of the electronic device may receive the drawing request sent by the first application program, that is, the first application program may request the choreographer corresponding to the application program to execute the corresponding drawing operation.

S511: The choreographer of the electronic device sends a request for a vertical synchronization signal to the display synthesis system.

After the choreographer corresponding to the application program of the electronic device receives the drawing request sent by the first application program, the choreographer corresponding to the application program of the electronic device may send the request for the vertical synchronization signal to the display synthesis system, so that the choreographer corresponding to the application program can correspondingly receive the request for the vertical synchronization signal sent by the display synthesis system.

S512: The choreographer of the electronic device records a moment of receiving the drawing request.

When the choreographer corresponding to the application program of the electronic device sends the request for the vertical synchronization signal to the display synthesis system, the choreographer of the electronic device may also record the moment of receiving the drawing request. Because the choreographer corresponding to the application program receives the drawing request, that is, sends the request for the vertical synchronization signal to the display synthesis system, the moment of receiving the drawing request may also be referred to as a moment of sending vertical synchronization signal request information, and the moment of receiving the drawing request is the moment at which the application program last requests for the drawing from the choreographer corresponding to the application program.

S513: The display synthesis system of the electronic device receives the request for the vertical synchronization signal, and requests for the vertical synchronization signal from hardware of the electronic device.

After the display synthesis system of the electronic device receives the request for the vertical synchronization signal sent by the choreographer corresponding to the application program, the display synthesis system of the electronic device may request for the vertical synchronization signal from the hardware of the electronic device.

It should be noted that, a frequency at which the display synthesis system of the electronic device requests for the vertical synchronization signal from the hardware of the electronic device for the foreground application program is the same as a frequency at which the display synthesis system of the electronic device requests for the vertical synchronization signal from the hardware of the electronic device for the background application program.

S514: The display synthesis system of the electronic device receives the vertical synchronization signal sent by the hardware.

S515: The display synthesis system of the electronic device sends the vertical synchronization signal to the choreographer.

After the display synthesis system of the electronic device receives the vertical synchronization signal sent by the hardware of the electronic device, the display synthesis system of the electronic device may send the vertical synchronization signal to the choreographer corresponding to the application program of the electronic device, so that the choreographer corresponding to the application program of the electronic device can execute the corresponding drawing operation based on the vertical synchronization signal.

S516: The choreographer of the electronic device receives the vertical synchronization signal and records a moment of receiving the vertical synchronization signal.

After the choreographer corresponding to the application program of the electronic device receives the vertical synchronization signal, the choreographer of the electronic device may record the moment of receiving the vertical synchronization signal. When receiving the vertical synchronization signal, the choreographer corresponding to the application program of the electronic device executes the drawing operation based on the vertical synchronization signal. Therefore, the moment at which the choreographer corresponding to the application program receives the vertical synchronization signal is a moment at which the choreographer corresponding to the application program executes the drawing operation.

S517: The choreographer of the electronic device determines whether a first time interval is greater than the minimum time interval.

After the choreographer corresponding to the application program of the electronic device records the moment of receiving the vertical synchronization signal, the choreographer corresponding to the application program of the electronic device may determine the first time interval based on the moment of receiving the drawing request and the moment of receiving the vertical synchronization signal (that is, the moment at which the choreographer corresponding to the application program executes the drawing operation). The first time interval is a time interval between the moment of receiving the drawing request and the moment at which the choreographer executes the drawing operation.

**In** a case in which the choreographer corresponding to the application program of the electronic device determines that the first time interval is greater than the minimum time interval, the choreographer corresponding to the application program of the electronic device may execute the drawing operation based on the vertical synchronization signal, that is, the electronic device may continue to perform S518 described below. In a case in which the choreographer corresponding to the application program of the electronic device determines that the first time interval is less than the minimum time interval, the choreographer corresponding to the application program of the electronic device may execute the drawing operation based on the vertical synchronization signal after the first time interval is greater than the minimum time interval, that is, the electronic device may continue to perform S519 described below.

S518: The choreographer of the electronic device executes the drawing operation based on the vertical synchronization signal.

In the case in which the choreographer corresponding to the application program of the electronic device determines that the first time interval is greater than the minimum time interval, the choreographer corresponding to the application program of the electronic device may execute the corresponding drawing operation based on the vertical synchronization signal, that is, the choreographer corresponding to the application program may draw an interface or dynamic effect corresponding to the first application program.

S519: After the first time interval is greater than the minimum time interval, the choreographer of the electronic device executes the drawing operation based on the vertical synchronization signal. When the choreographer of the electronic device determines that the first time interval is less than the minimum time interval, the choreographer corresponding to the application program of the electronic device may execute the drawing operation based on the vertical synchronization signal after the first time interval is greater than the minimum time interval, that is, the choreographer corresponding to the application program increases the time interval between the moment of receiving the drawing request from the application program and the moment of executing the drawing operation. In this way, the frame rate of drawing the interface or the dynamic effect corresponding to the background application program by the choreographer corresponding to the application program is reduced.

The minimum time interval may be a time interval corresponding to a second frequency. To be specific, when the display synthesis system of the electronic device sends the vertical synchronization signal to the choreographer corresponding to the application program at the second frequency, a time interval between two vertical synchronization signal transmissions may be the minimum time interval.

S520: The application window module of the electronic device detects that a second window corresponding to the first application program is switched to a foreground of the electronic device. When the first application program is the background application program, that is, the windows corresponding to the first application program are all the background windows, the application window module of the electronic device may continue to monitor whether the second window corresponding to the first application program is switched to the foreground of the electronic device. The second window may be one or more of the windows corresponding to the first application program.

When the application window module of the electronic device detects that the second window corresponding to the first application program is switched to the foreground of the electronic device, the electronic device may determine that the first application program is the foreground application program, so that the choreographer corresponding to the application program of the electronic device can record the first application program as the foreground application program. S521: The application window module of the electronic device sends, to the choreographer, a notification that the second window is switched to the foreground.

When the application window module of the electronic device detects that the second window corresponding to the first application program is switched to the foreground of the electronic device, the application window module of the electronic device may send, to the application status management module of the electronic device, the notification that the second window is switched to the foreground. In some examples, the notification that the second window is switched to the foreground may include the identifier of the first application program.

S522: The choreographer of the electronic device receives the notification that the second window is switched to the foreground.

S523: The choreographer of the electronic device records the first application program as the foreground application program.

After the choreographer corresponding to the application program of the electronic device receives the notification that the second window is switched to the foreground, the choreographer of the electronic device may record the first application program as the foreground application program. Therefore, when receiving the vertical synchronization signal sent by the display synthesis system, the choreographer corresponding to the application program of the electronic device can directly execute the drawing operation based on the vertical synchronization signal and does not need to execute the drawing operation based on the vertical synchronization signal in a case in which the first time interval is greater than the minimum time interval.

In some examples, that the choreographer corresponding to the application program of the electronic device records the first application program as the foreground application program may include: The choreographer corresponding to the application program of the electronic device sets the value of the variable mIsHasVisibleWindow to false.

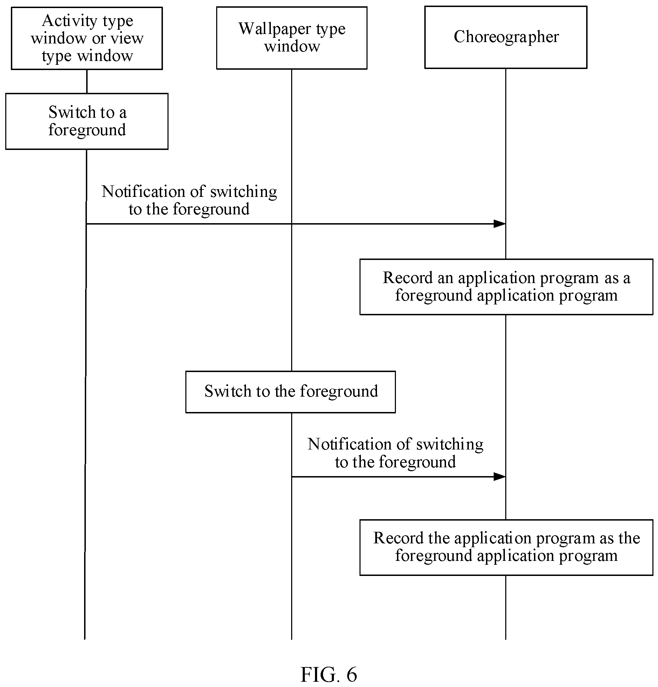

For example, as shown in FIG. 6, the application window module of the electronic device detects that the second window corresponding to the first application program is switched to the foreground of the electronic device, the second window may be an activity type window or a view type window corresponding to the first application program, and the second window may be a wallpaper type window corresponding to the first application program. When the application window module of the electronic device detects that the activity type window or the view type window corresponding to the first application program is switched to the foreground, that is, switched to the foreground of the electronic device, the application window module of the electronic device may send, to the choreographer corresponding to the application program, a notification of switching to the foreground. **In** this way, the choreographer corresponding to the application program of the electronic device receives the notification of switching to the foreground and records the first application program as the foreground application program. For example, the choreographer corresponding to the application program sets the value of the corresponding variable mIsHasVisibleWindow to false.

When the application window module of the electronic device detects that the wallpaper type window corresponding to the first application program is switched to the foreground, that is, switched to the foreground of the electronic device, the application window module of the electronic device may send, to the choreographer corresponding to the application program, a notification of switching to the foreground. In this way, the choreographer corresponding to the application program of the electronic device receives the notification of switching to the foreground and records the first application program as the foreground application program. For example, the choreographer corresponding to the application program sets the value of the corresponding variable mIsHasVisibleWindow to false.

According to the solution of this application, when the first window of the first application program of the electronic device is switched to the background of the electronic device, the electronic device may determine whether all the windows of the first application program are the background windows. When it is determined that all the windows of the first application program are the background windows, it may be determined that the first application program is the background application program. When the first application program is the background application program, the electronic device may execute the drawing operation based on the vertical synchronization signal in the case in which the time interval between the moment of receiving the drawing request and the moment of executing the drawing operation is greater than the minimum time interval, that is, increase the time interval between the moment of receiving the drawing request and the moment of executing the drawing operation. Therefore, the frame rate of drawing the interface or the dynamic effect corresponding to the background application program by the choreographer corresponding to the application program is reduced. In this way, a waste of a system resource of the electronic device can be avoided, for example, a waste of a resource of a CPU of the electronic device is avoided, thereby reducing power consumption of the electronic device.

When the second window of the first application program is switched to the foreground of the electronic device, the electronic device may determine that the first application program is the foreground application program, and the choreographer corresponding to the application program of the electronic device may execute the drawing operation based on the vertical synchronization signal without increasing the time interval between the moment of receiving the drawing request and the moment of executing the drawing operation. In this way, the frame rate of drawing the interface or the dynamic effect corresponding to the background application program by the choreographer corresponding to the application program is restored, thereby not affecting use experience of the first application program.

In this case, the time interval between the moment of receiving the drawing request and the moment of executing the drawing operation may be a time interval corresponding to the first frequency. To be specific, when the display synthesis system of the electronic device sends the vertical synchronization signal to the choreographer corresponding to the application program at the first frequency, the time interval between two consecutive vertical synchronization signal transmissions may be the time interval between the moment of receiving the drawing request and the moment of executing the drawing operation.

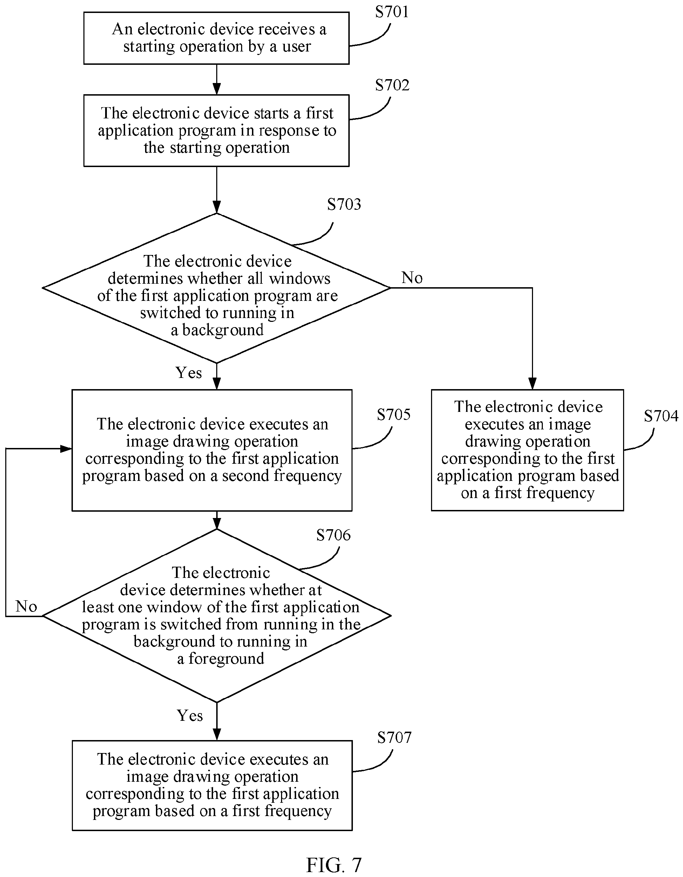

For ease of understanding, with reference to FIG. 7, an image drawing method according to an embodiment of this application is described below. As shown in FIG. 7, the image drawing method may include S701 to S707 below.

S701: An electronic device receives a starting operation by a user.

When the user needs to start an application program included in the electronic device, the electronic device may receive the starting operation by the user, so that the electronic device can start the corresponding application program.

S702: The electronic device starts a first application program in response to the starting operation. When the electronic device receives the starting operation by the user, the electronic device may start the first application program in response to the starting operation. In some examples, the first application program may be a music playback application program or a video playback application program, and a specific type of the first application program is not limited in this embodiment of this application.

In some examples, the first application program may be one application program included in the electronic device, or may be a plurality of application programs included in the electronic device. It should be noted that, when the electronic device starts the first application program, the electronic device may run the application program in a foreground of the electronic device. In other words, the application program may be a foreground application program, and the foreground application program is an application program that can directly interact with the user. When the electronic device starts the first application program, that is, when the first application program runs, the first application program may include one or more windows, and the window of the first application program may include an activity type window, a view type window, or a wallpaper type window.

When the first application program is the foreground application program, that is, when the first application program runs in the foreground of the electronic device, the first application program can directly interact with the user, at least one window of the first application program runs in the foreground of the electronic device, and the window running in the foreground of the electronic device may be referred to as a foreground window.

When the first application program is switched to a background application program, that is, when the first application program runs in a background of the electronic device, the first application program cannot directly interact with the user, all windows of the first application program run in the background of the electronic device, and a window running in the background of the electronic device may be referred to as a background window.

S703: The electronic device determines whether all the windows of the first application program are switched to running in the background.

After the electronic device starts the first application program, the electronic device may determine (which may also be referred to as monitoring) whether all the windows of the first application program are switched to running in the background of the electronic device.

In a case in which the electronic device determines that at least one window of the first application program runs in the foreground of the electronic device (that is, all the windows of the first application program are not all switched to running in the background of the electronic device), the electronic device may execute an image drawing operation corresponding to the first application program based on a frequency before reduction (that is, a first frequency), that is, the electronic device may continue to perform S704 described below. In a case in which the electronic device determines that all the windows of the first application program are switched to running in the background of the electronic device, the electronic device may execute the image drawing operation corresponding to the first application program based on a frequency after reduction (second frequency), that is, the electronic device may continue to perform S705 described below. In some examples, that the electronic device determines whether all the windows of the first application program are switched to running in the background of the electronic device may include: When the electronic device detects that at least one window included in the first application program is switched to running in the background of the electronic device, the electronic device may determine whether all the windows of the first application program are switched to running in the background of the electronic device.

For example, a window management module of the electronic device may monitor whether at least one window of the first application program is switched to running in the background of the electronic device. In a case in which the window management module of the electronic device detects that at least one window of the first application program (for example, referred to as a first window) is switched to running in the background of the electronic device, the electronic device may continue to determine whether all the windows of the first application program are switched to running in the background of the electronic device.

That the electronic device determines whether all the windows of the first application program are switched to running in the background of the electronic device may include: When the window management module of the electronic device detects that the first window corresponding to the first application program is switched to the background of the electronic device, the window management module of the electronic device may send, to an application status management module, a notification that the first window is switched to the background, and the application status management module of the electronic device receives the notification that the first window is switched to the background. The application status management module of the electronic device may continue to determine whether all the windows of the first application program are switched to running in the background (that is, determine whether the first application program is the background application program).

Specifically, for a specific implementation in which the electronic device determines whether all the windows of the first application program are switched to running in the background of the electronic device in the foregoing example, refer to the specific implementation in S401 to S404 described above. Details are not described again in this embodiment of this application.

For another example, an application window management module of the electronic device may monitor whether at least one window of the first application program is switched to running in the background of the electronic device. In a case in which the application window management module of the electronic device detects that at least one window of the first application program (for example, referred to as a first window) is switched to running in the background of the electronic device, the electronic device may continue to determine whether all the windows of the first application program are switched to running in the background of the electronic device. That the electronic device determines whether all the windows of the first application program are switched to running in the background of the electronic device may include: When the application window management module of the electronic device detects that the first window corresponding to the first application program is switched to the background of the electronic device, the application window management module of the electronic device may send, to the window management module, a notification that the first window is switched to the background, and the window management module of the electronic device receives the notification that the first window is switched to the background. The window management module of the electronic device may continue to determine whether all the windows of the first application program are switched to running in the background (that is, determine whether the first application program is the background application program).

Specifically, for a specific implementation in which the electronic device determines whether all the windows of the first application program are switched to running in the background of the electronic device in the foregoing example, refer to the specific implementation in S501 to S504 described above. Details are not described again in this embodiment of this application.

S704: The electronic device executes the image drawing operation corresponding to the first application program based on the first frequency.

When the electronic device determines that at least one window of the first application program runs in the foreground of the electronic device, that is, when the first application program is the foreground application program, the electronic device may execute the image drawing operation corresponding to the first application program based on the first frequency, for example, the electronic device may execute the drawing operation of an interface, dynamic effect, or the like corresponding to the first application program based on the first frequency.

In some examples, the first frequency may be a preset frequency. For example, the first frequency may be a frequency of refreshing a display image on a display screen of the electronic device. To be specific, after the electronic device executes the drawing operation of the interface, the dynamic effect, or the like corresponding to the first application program based on the first frequency, the display image on the screen of the electronic device may be refreshed at the first frequency, that is, display of the interface, the dynamic effect, or the like corresponding to the first application program on the screen of the electronic device may be refreshed at the first frequency.

In some examples, that the electronic device executes the image drawing operation corresponding to the first application program based on the first frequency may include: A display synthesis system of the electronic device may generate a first vertical synchronization signal, where a frequency of the first vertical synchronization signal is the first frequency. A choreographer corresponding to the first application program may execute the image drawing operation corresponding to the first application program based on the received first vertical synchronization signal.

Before the display synthesis system of the electronic device generates the first vertical synchronization signal, the first application program may send an image drawing request to the choreographer corresponding to the first application program. The choreographer corresponding to the first application program may send vertical synchronization signal request information to the display synthesis system of the electronic device at the first frequency in response to the image drawing request. The display synthesis system of the electronic device may receive the vertical synchronization signal request information, and send the vertical synchronization signal request information to hardware of the electronic device at the first frequency. The hardware of the electronic device may send a vertical synchronization signal to the display synthesis system of the electronic device in response to the received vertical synchronization signal request information. The display synthesis system of the electronic device may receive the vertical synchronization signal sent by the hardware of the electronic device.

After the display synthesis system of the electronic device receives the vertical synchronization signal, the display synthesis of the electronic device may generate the first vertical synchronization signal, where a frequency of the first vertical synchronization signal may be the first frequency, and send the first vertical synchronization signal to the choreographer corresponding to the first application program, so that the choreographer corresponding to the first application program can receive the first vertical synchronization signal at the first frequency. That is, a frequency at which the choreographer corresponding to the first application program executes the image drawing operation corresponding to the first application program based on the received first vertical synchronization signal is the first frequency.

S705: The electronic device executes the image drawing operation corresponding to the first application program based on the second frequency.

When the electronic device determines that all the windows of the first application program are switched to running in the background of the electronic device, that is, when the first application program is the background application program, the electronic device may execute the image drawing operation corresponding to the first application program based on the second frequency, for example, the electronic device may execute the drawing operation of the interface, the dynamic effect, or the like corresponding to the first application program based on the second frequency.

The second frequency may be less than the first frequency, that is, the second frequency may be any frequency less than the first frequency. Therefore, the electronic device can reduce a frequency of drawing for the background application program (that is, the first application program). In this way, a waste of a system resource of the electronic device can be avoided, for example, a waste of a resource of a CPU of the electronic device is avoided, thereby reducing power consumption of the electronic device.

In some examples, the second frequency may be a preset frequency, and the second frequency is less than the first frequency. The second frequency may be a frequency determined based on an actual drawing scene of the electronic device, and the second frequency is less than the first frequency.

It should be noted that, the second frequency may be a fixed frequency, or the second frequency may be an average frequency within a preset time period, for example, an average frequency of frequencies corresponding to image drawing operations corresponding to application programs executed by the electronic device within a preset time period.

In some examples, when the electronic device executes the image drawing operation corresponding to the first application program based on the second frequency, the display image on the screen of the electronic device is refreshed at the first frequency, for example, an interface, dynamic effect, or the like corresponding to another foreground application program is displayed. To be specific, when the electronic device executes the drawing operation of the interface, the dynamic effect, or the like corresponding to the first application program based on the second frequency, the display image on the screen of the electronic device may be refreshed at the first frequency, that is, display of the interface, the dynamic effect, or the like corresponding to another foreground application program on the screen of the electronic device may be refreshed at the first frequency. That is, when the first application program is switched from running in the foreground to the background, the display image on the screen of the electronic device may be refreshed at a frequency before reduction, thereby not affecting display of another application program by the electronic device.

In some examples, that the electronic device executes the image drawing operation corresponding to the first application program based on the second frequency may include: The display synthesis system of the electronic device may generate a second vertical synchronization signal, where a frequency of the second vertical synchronization signal is the second frequency. The choreographer corresponding to the first application program may execute the image drawing operation corresponding to the first application program based on the received second vertical synchronization signal.

Before the display synthesis system of the electronic device generates the second vertical synchronization signal, the first application program may send an image drawing request to the choreographer corresponding to the first application program. The choreographer corresponding to the first application program may send vertical synchronization signal request information to the display synthesis system of the electronic device at the first frequency in response to the image drawing request. The display synthesis system of the electronic device may receive the vertical synchronization signal request information, and send the vertical synchronization signal request information to hardware of the electronic device at the first frequency. The hardware of the electronic device may send the second vertical synchronization signal to the display synthesis system of the electronic device in response to the received vertical synchronization signal request information. The display synthesis system of the electronic device may receive the vertical synchronization signal sent by the hardware of the electronic device.

After the display synthesis system of the electronic device receives the vertical synchronization signal, the display synthesis of the electronic device may generate the second vertical synchronization signal, where the frequency of the second vertical synchronization signal is the second frequency, and send the second vertical synchronization signal to the choreographer corresponding to the first application program, so that the choreographer corresponding to the first application program can receive the second vertical synchronization signal at the second frequency. That is, a frequency at which the choreographer corresponding to the first application program executes the image drawing operation corresponding to the first application program based on the received second vertical synchronization signal is the second frequency.

Specifically, for a specific implementation in which the electronic device executes the image drawing operation corresponding to the first application program based on the second frequency in the foregoing example, refer to the specific implementation in S405 to S412. Details are not described again in this embodiment of this application.

In some other examples, that the electronic device executes the image drawing operation corresponding to the first application program based on the second frequency may include: A display synthesis system of the electronic device may send a first vertical synchronization signal to a choreographer corresponding to the first application program at the first frequency. The choreographer corresponding to the first application program may receive a part of vertical synchronization signals in the first vertical synchronization signals. The choreographer corresponding to the first application program may execute the image drawing operation corresponding to the first application program based on the part of vertical synchronization signals in the first vertical synchronization signals, where a time interval between any two vertical synchronization signals in the part of vertical synchronization signals is the reciprocal of the second frequency.

That is, when all the windows of the first application program are background windows, a plurality of vertical synchronization signals may be sent, through the display synthesis system, to the choreographer corresponding to the first application program at the frequency before reduction, and the choreographer corresponding to the first application program receives a part of vertical synchronization signals in the plurality of vertical synchronization signals, and executes the drawing operation corresponding to the first application program based on the part of vertical synchronization signals. Because a time interval between any two vertical synchronization signals in the part of vertical synchronization signals is a reciprocal of the second frequency, that is, a frequency corresponding to the part of vertical synchronization signals is the frequency after reduction (that is, the second frequency), the electronic device may execute the drawing operation based on the frequency after reduction.

In some other examples, the choreographer corresponding to the first application program sends vertical synchronization signal request information to the display synthesis system of the electronic device, where a time interval between any two pieces of vertical synchronization signal request information in the vertical synchronization signal request information is greater than a first threshold, and the first threshold is determined based on the second frequency. For example, the first threshold is the reciprocal of the second frequency, that is, the time interval between any two pieces of vertical synchronization signal request information in the vertical synchronization signal request information is greater than a time interval corresponding to the second frequency.

The display synthesis system of the electronic device may send a vertical synchronization signal to the choreographer corresponding to the first application program based on the received vertical synchronization signal request information, so that the choreographer corresponding to the first application program can execute the drawing operation corresponding to the first application program based on the received vertical synchronization signal.

That is, when all the windows of the first application program are the background windows, the choreographer corresponding to the first application program may send the vertical synchronization signal request information to the display synthesis system of the electronic device at the time interval corresponding to the frequency after reduction (that is, the second frequency). That is, a frequency at which the choreographer corresponding to the first application program sends the vertical synchronization signal request information to the display synthesis system of the electronic device is reduced. In this way, a frequency at which the display synthesis system sends the vertical synchronization signal to the choreographer corresponding to the application program can be reduced, so that the choreographer corresponding to the application program can execute the drawing operation based on the frequency after reduction after receiving the frequency of the vertical synchronization signal, and the choreographer corresponding to the application program reduces the frequency of executing the drawing operation.

In some other examples, that the electronic device executes the image drawing operation corresponding to the first application program based on the second frequency may include: A display synthesis system of the electronic device may send a first vertical synchronization signal to a choreographer corresponding to the first application program at the first frequency. The choreographer corresponding to the first application program may receive the first vertical synchronization signal sent by the display synthesis system of the electronic device.

After the choreographer corresponding to the first application program receives the first vertical synchronization signal, the choreographer corresponding to the first application program may determine whether a time interval between a moment of receiving the first vertical synchronization signal and a moment of last executing an image drawing operation corresponding to the first application program is greater than a second threshold, where the second threshold may be determined based on the second frequency.

In a case in which the choreographer corresponding to the first application program determines that the time interval between the moment of receiving the first vertical synchronization signal and the moment of last executing the image drawing operation corresponding to the first application program is greater than the second threshold, the choreographer corresponding to the first application program may execute the image drawing operation corresponding to the first application program. In a case in which the choreographer corresponding to the first application program determines that the time interval between the moment of receiving the first vertical synchronization signal and the moment of last executing the image drawing operation corresponding to the first application program is not greater than the second threshold, the choreographer corresponding to the first application program may execute the image drawing operation corresponding to the first application program after the time interval between the moment of receiving the first vertical synchronization signal and the moment of last executing the image drawing operation corresponding to the first application program is greater than the second threshold.

That is, when all windows of an application program are background windows, a choreographer corresponding to the application program may execute an image drawing operation corresponding to the application program in a case in which a time interval between a moment of receiving a vertical synchronization signal and a moment of last executing the image drawing operation corresponding to the application program is greater than a second threshold. **In** this way, the choreographer corresponding to the application program reduces a frequency of executing the drawing operation.

Specifically, for a specific implementation in which the electronic device executes the image drawing operation corresponding to the first application program based on the second frequency in the foregoing example, refer to the specific implementation in S505 to S519. Details are not described again in this embodiment of this application.

S706: The electronic device determines whether at least one window of the first application program is switched from running in the background to running in the foreground.

After all the windows of the first application program are switched to running in the background of the electronic device, the electronic device may continue to determine whether at least one window of the first application program is switched from running in the background of the electronic device to running in the foreground of the electronic device, that is, determine whether the first application program is switched to the foreground application program.

When the electronic device determines that at least one window of the first application program is switched from running in the background of the electronic device to running in the foreground of the electronic device, that is, the electronic device determines that the first application program is switched to the foreground application program, the electronic device may execute the image drawing operation corresponding to the first application program based on the frequency before reduction (that is, the first frequency), that is, the electronic device may continue to perform S707 described below. When the electronic device determines that all the windows of the first application program run in the background of the electronic device, that is, the electronic device determines that the first application program is still the background application program, the electronic device may execute the image drawing operation corresponding to the first application program based on the frequency after reduction (that is, the second frequency), that is, the electronic device may continue to perform S705 described above.

In some examples, that the electronic device determines whether at least one window of the first application program is switched from running in the background of the electronic device to running in the foreground of the electronic device may include: The window management module of the electronic device may determine whether at least one window (that is, a second window) of the first application program is switched from running in the background of the electronic device to running in the foreground of the electronic device.

Specifically, for a specific implementation in which the electronic device determines whether at least one window of the first application program is switched from running in the background of the electronic device to running in the foreground of the electronic device in the foregoing example, refer to the specific implementation in S413. Details are not described again in this embodiment of this application.

In some other examples, that the electronic device determines whether at least one window of the first application program is switched from running in the background of the electronic device to running in the foreground of the electronic device may include: The application window module of the electronic device determines whether at least one window (that is, the second window) of the first application program is switched to the foreground of the electronic device.

Specifically, for a specific implementation in which the electronic device determines whether at least one window of the first application program is switched from running in the background of the electronic device to running in the foreground of the electronic device in the foregoing example, refer to the specific implementation in S520. Details are not described again in this embodiment of this application.

S707: The electronic device executes the image drawing operation corresponding to the first application program based on the first frequency.

When the electronic device determines that at least one window of the first application program is switched from running in the background of the electronic device to running in the foreground of the electronic device, the electronic device may execute the image drawing operation corresponding to the first application program based on the frequency before reduction (that is, the first frequency).

In some examples, when the electronic device determines that at least one window of the first application program is switched from running in the background of the electronic device to running in the foreground of the electronic device, that the electronic device executes the image drawing operation corresponding to the first application program based on the first frequency may include: When the window management module of the electronic device determines that at least one window of the first application program is switched from running in the background of the electronic device to running in the foreground of the electronic device, the window management module of the electronic device may send, to the application status management module, a notification that the second window is switched to the foreground. After receiving the notification that the second window is switched to the foreground, the application status management module of the electronic device may send, to the display synthesis system, a notification that the first application program is the foreground application program. The display synthesis system of the electronic device may adjust, after receiving the notification that the first application program is the foreground application program, a frequency of sending the vertical synchronization signal to the first frequency. The display synthesis system of the electronic device requests for the vertical synchronization signal from the hardware of the electronic device based on the first frequency. The display synthesis system of the electronic device receives the vertical synchronization signal sent by the hardware and sends the vertical synchronization signal to the choreographer corresponding to the first application program at the first frequency. The choreographer corresponding to the first application program receives the vertical synchronization signal and executes the drawing operation based on the vertical synchronization signal.

Specifically, for a specific implementation in which the electronic device executes the image drawing operation corresponding to the first application program based on the first frequency in the foregoing example, refer to the specific implementation in S414 to S423. Details are not described again in this embodiment of this application.

In some other examples, when the electronic device determines that at least one window of the first application program is switched from running in the background of the electronic device to running in the foreground of the electronic device, that the electronic device executes the image drawing operation corresponding to the first application program based on the first frequency may include: When the application window module of the electronic device detects that the second window corresponding to the first application program is switched to the foreground of the electronic device, the application window module of the electronic device may send, to the choreographer corresponding to the first application program, the notification that the second window is switched to the foreground. After the choreographer corresponding to the first application program receives the notification that the second window is switched to the foreground, the choreographer corresponding to the first application program may determine that the first application program is the foreground application program, so that the choreographer corresponding to the first application program adjusts the frequency of executing the image drawing operation corresponding to the first application program to the first frequency.

Specifically, for a specific implementation in which the electronic device executes the image drawing operation corresponding to the first application program based on the first frequency in the foregoing example, refer to the specific implementation in S521 to S523. Details are not described again in this embodiment of this application.

According to the solution of this application, when an application program is switched to running in a foreground, a display image on a screen of an electronic device is refreshed at a frequency before reduction. In this way, display of the application program by the electronic device is not affected.

Corresponding to the methods in the foregoing embodiments, an embodiment of this application further provides an image drawing apparatus. The image drawing apparatus is applicable to an electronic device, to implement the methods in the foregoing embodiments. Functions of the image drawing apparatus may be implemented through hardware, or may be implemented through hardware executing corresponding software. The hardware or software includes one or more modules corresponding to the functions.

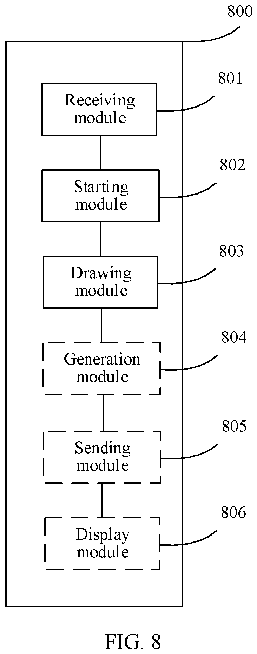

For example, FIG. 8 is a diagram of a structure of an image drawing apparatus 800. As shown in FIG. 8, the image drawing apparatus 800 may include: a receiving module 801, a starting module 802, a drawing module 803, and the like.

The receiving module 801 may be configured to receive a starting operation by a user.

The starting module 802 may be configured to start a first application program in response to the starting operation.

The drawing module 803 may be configured to: in a case in which at least one window of the first application program runs in a foreground of the electronic device, execute an image drawing operation corresponding to the first application program based on a first frequency.

The drawing module 803 may be further configured to: in a case in which all windows of the first application program are switched to running in a background, execute an image drawing operation corresponding to the first application program based on a second frequency, where the second frequency is less than the first frequency.

In another possible implementation, the image drawing apparatus 800 may further include a generation module 804.

The generation module 804 may be configured to generate a first vertical synchronization signal, where a frequency of the first vertical synchronization signal is the first frequency.

The drawing module 803 may be further configured to execute an image drawing operation corresponding to the first application program based on the received first vertical synchronization signal.

The generation module 804 may be further configured to generate a second vertical synchronization signal, where a frequency of the second vertical synchronization signal is the second frequency.

The drawing module 803 may be further configured to execute the image drawing operation corresponding to the first application program based on the received second vertical synchronization signal.

In another possible implementation, the image drawing apparatus 800 may further include a sending module 805.

The sending module 805 may be configured to send an image drawing request to the choreographer corresponding to the first application program.

The sending module 805 may be further configured to send vertical synchronization signal request information to a display synthesis system of the electronic device at the first frequency in response to the image drawing request.

The receiving module 801 may be further configured to receive the vertical synchronization signal request information.

The sending module 805 may be further configured to send the vertical synchronization signal request information to hardware of the electronic device at the first frequency.

The sending module 805 may be further configured to send the second vertical synchronization signal to the display synthesis system of the electronic device in response to the received vertical synchronization signal request information.

The receiving module 801 may be further configured to receive the second vertical synchronization signal sent by the hardware of the electronic device.

In another possible implementation, the sending module 805 may be further configured to send first vertical synchronization signals to a choreographer corresponding to the first application program at the first frequency.

The receiving module 801 may be further configured to receive a part of vertical synchronization signals in the first vertical synchronization signals.

The drawing module 803 may be further configured to execute the image drawing operation corresponding to the first application program based on the part of vertical synchronization signals in the first vertical synchronization signals, where a time interval between any two vertical synchronization signals in the part of vertical synchronization signals is a reciprocal of the second frequency.

In another possible implementation, the sending module 805 may be further configured to send vertical synchronization signal request information to the display synthesis system of the electronic device, where a time interval between any two pieces of vertical synchronization signal request information in the vertical synchronization signal request information is greater than a first threshold, and the first threshold is determined based on the second frequency.

In another possible implementation, the first threshold is the reciprocal of the second frequency. In another possible implementation, the sending module 805 may be further configured to send a first vertical synchronization signal to a choreographer corresponding to the first application program at the first frequency.

The receiving module 801 may be further configured to receive the first vertical synchronization signal.

The drawing module 803 may be further configured to: in a case in which the choreographer corresponding to the first application program determines that a time interval between a moment of receiving the first vertical synchronization signal and a moment of last executing the image drawing operation corresponding to the first application program is greater than a second threshold, execute the image drawing operation corresponding to the first application program, where the second threshold is determined based on the second frequency.

In another possible implementation, the drawing module 803 may be further configured to: in a case in which at least one window of the first application program is switched from running in the background of the electronic device to running in the foreground of the electronic device, execute the image drawing operation corresponding to the first application program based on the first frequency.

In another possible implementation, the first application program includes a music playback application program or a video playback application program.

In another possible implementation, the window of the first application program may include: at least one of an activity type window, a view type window, and a wallpaper type window.

In another possible implementation, the image drawing apparatus 800 may further include a display module 806.

The display module 806 may be configured to refresh a display image at the first frequency.

It should be understood that division into units or modules (referred to as units below) in the apparatus is merely logical function division. During an actual implementation, a part or all of the units or modules may be integrated into a physical entity or may be physically separated. The units in the apparatus may all be implemented in a form of software invoked by a processing element; or may all be implemented in a form of hardware; or a part of units are implemented in a form of software invoked by a processing element, and a part of units are implemented in a form of hardware.

For example, the units may be processing elements that are independently arranged, or may be integrated in a chip of the apparatus for implementation. In addition, the units may alternatively be stored in a memory in a form of a program, and are invoked by a processing element of the apparatus to perform functions of the units. In addition, a part or all of the units may be integrated together, or may be implemented independently. The processing element may also be referred to as a processor and may be an integrated circuit having a signal processing capability. In an implementation process, steps in the foregoing method or the foregoing units may be implemented through a hardware integrated logical circuit in a processor element or may be implemented in a form of software invoked by a processing element.

In one example, the units in the apparatus may be configured as one or more integrated circuits configured to implement the foregoing method, for example, one or more ASICs, one or more DSPs, one or more FPGAs, or a combination of at least two integrated circuit forms thereof.

In another example, when a unit in the apparatus can be implemented in a form of a processing element scheduling a program, the processing element may be a general-purpose processor, for example, a CPU or another processor that can invoke a program. For another example, these units may be integrated together and implemented in a form of a system on a chip SOC.

In an implementation, the units of the apparatus for implementing the corresponding steps in the method may be implemented in a form of a processing element scheduling a program. For example, the apparatus may include a processing element and a storage element, where the processing element invokes a program stored in the storage element, to perform the method described in the foregoing method embodiments. The storage element may be a storage element located on the same chip as the processing element, that is, a storage-element-on-a-chip.

In another implementation, the program used for performing the method may be stored on a storage element located on a different chip from the processing element, that is, a storage-element-out-a-chip. In this case, the processing element invokes or loads the program from the storage-element-out-a-chip onto the storage-element-on-a-chip, to invoke the program and perform the method described in the foregoing method embodiments.

For example, an embodiment of this application may further provide an apparatus, for example, an electronic device, which may include: a processor; and a memory, configured to store instructions executable by the processor. The processor is configured to cause, when executing the instructions, the electronic device to implement the image drawing method as described in the foregoing embodiments. The memory may be arranged in the electronic device or may be arranged outside the electronic device. In addition, there may be one or more processors.

In still another implementation, the units of the apparatus for implementing the steps in the method may be configured as one or more processing elements, the processing elements may be provided on the foregoing electronic devices, and the processing elements may be integrated circuits, for example, one or more ASICs, one or more DSPs, one or more FPGAs, or a combination of these types of integrated circuits. The integrated circuits may be integrated to form a chip.

For example, an embodiment of this application further provides a chip. The chip is applicable to the foregoing electronic device. The chip includes one or more interface circuits and one or more processors. The interface circuit and the processor are interconnected through a line. The processor receives and executes computer instructions from a memory of the electronic device through the interface circuit, to implement the method in the foregoing method embodiments.

An embodiment of this application further provides a computer program product, including computer instructions run on the foregoing electronic device.

Through the foregoing descriptions of the implementations, a person skilled in the art may clearly understand that, for the purpose of convenient and brief description, division into the foregoing functional modules is merely used as an example for description. During actual application, the foregoing functions may be allocated to different functional modules and implemented based on a requirement. That is, an inner structure of an apparatus is divided into different functional modules, to implement a part or all of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, that is, may be located in one place, or may be distributed in different places. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially or the part contributing to the conventional technology or a part or all of the technical solutions may be implemented in a form of a software product, for example: a program. The software product is stored in a program product such as a computer-readable storage medium and includes several instructions for instructing a device (which may be a single-chip microcomputer, a chip, or the like) or a processor (processor) to perform a part or all of the steps of the methods described in embodiments of this application. The storage medium includes: a USB flash drive, a removable hard disk, a ROM, a RAM, a magnetic disk, an optical disc, or the like that can store program code. For example, an embodiment of this application may further provide a computer-readable storage medium, storing computer program instructions thereon. When the computer program instructions are executed by an electronic device, the electronic device is caused to implement the image drawing method in the foregoing method embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An image drawing control method, applied to an electronic device, wherein the method comprises:
receiving, by the electronic device, a starting operation by a user;
starting, by the electronic device, a first application program in response to the starting operation;
in a case in which at least one window of the first application program runs in a foreground of the electronic device, executing, by the electronic device, an image drawing operation corresponding to the first application program based on a first frequency; and
in a case in which all windows of the first application program are switched to running in a background, executing, by the electronic device, an image drawing operation corresponding to the first application program based on a second frequency, wherein the second frequency is less than the first frequency.

2. The method according to claim 1, wherein the executing, by the electronic device, an image drawing operation corresponding to the first application program based on a first frequency comprises:
generating, by a display synthesis system of the electronic device, a first vertical synchronization signal, wherein a frequency of the first vertical synchronization signal is the first frequency; and
executing, by a choreographer corresponding to the first application program, the image drawing operation corresponding to the first application program based on the received first vertical synchronization signal; and
the executing, by the electronic device, an image drawing operation corresponding to the first application program based on a second frequency comprises:
generating, by the display synthesis system of the electronic device, a second vertical synchronization signal, wherein a frequency of the second vertical synchronization signal is the second frequency; and
executing, by the choreographer corresponding to the first application program, the image drawing operation corresponding to the first application program based on the received second vertical synchronization signal.

3. The method according to claim 2, wherein before the generating, by the display synthesis system of the electronic device, a second vertical synchronization signal, the method further comprises:
sending, by the first application program, an image drawing request to the choreographer corresponding to the first application program;
sending, by the choreographer corresponding to the first application program, vertical synchronization signal request information to the display synthesis system of the electronic device at the first frequency in response to the image drawing request;
receiving, by the display synthesis system of the electronic device, the vertical synchronization signal request information, and sending the vertical synchronization signal request information to hardware of the electronic device at the first frequency;
sending, by the hardware of the electronic device, a vertical synchronization signal to the display synthesis system of the electronic device in response to the received vertical synchronization signal request information; and
receiving, by the display synthesis system of the electronic device, the vertical synchronization signal sent by the hardware of the electronic device.

4. The method according to claim 1, wherein the executing, by the electronic device, an image drawing operation corresponding to the first application program based on a second frequency comprises:
sending, by a display synthesis system of the electronic device, first vertical synchronization signals to a choreographer corresponding to the first application program at the first frequency;
receiving, by the choreographer corresponding to the first application program, a part of vertical synchronization signals in the first vertical synchronization signals; and
executing, by the choreographer corresponding to the first application program, the image drawing operation corresponding to the first application program based on the part of vertical synchronization signals in the first vertical synchronization signals, wherein a time interval between any two vertical synchronization signals in the part of vertical synchronization signals is a reciprocal of the second frequency.

5. The method according to claim 4, wherein the method further comprises:
sending, by the choreographer corresponding to the first application program, vertical synchronization signal request information to the display synthesis system of the electronic device, wherein a time interval between any two pieces of vertical synchronization signal request information in the vertical synchronization signal request information is greater than a first threshold, and the first threshold is determined based on the second frequency.

6. The method according to claim 5, wherein the first threshold is the reciprocal of the second frequency.

7. The method according to claim 1, wherein the executing, by the electronic device, an image drawing operation corresponding to the first application program based on a second frequency comprises:
sending, by a display synthesis system of the electronic device, a first vertical synchronization signal to a choreographer corresponding to the first application program at the first frequency;
receiving, by the choreographer corresponding to the first application program, the first vertical synchronization signal; and
in a case in which the choreographer corresponding to the first application program determines that a time interval between a moment of receiving the first vertical synchronization signal and a moment of last executing the image drawing operation corresponding to the first application program is greater than a second threshold, executing, by the choreographer corresponding to the first application program, the image drawing operation corresponding to the first application program, wherein the second threshold is determined based on the second frequency.

8. The method according to any one of claims 1 to 7, wherein after all the windows of the first application program are switched to running in the background, the method further comprises:
in a case in which at least one window of the first application program is switched from running in the background of the electronic device to running in the foreground of the electronic device, executing, by the electronic device, the image drawing operation corresponding to the first application program based on the first frequency.

9. The method according to any one of claims 1 to 7, wherein the first application program comprises a music playback application program or a video playback application program.

10. The method according to any one of claims 1 to 7, wherein the window of the first application program comprises: at least one of an activity type window, a view type window, and a wallpaper type window.

11. The method according to any one of claims 1 to 7, wherein in the case in which all the windows of the first application program are switched to running in the background, the method further comprises:
refreshing a display image on a screen of the electronic device at the first frequency.

12. The method according to claim 11, wherein in a case in which at least one window of all the windows of the first application program is switched to running in the foreground of the electronic device, the method further comprises:
refreshing the display image on the screen of the electronic device at the first frequency.

13. An electronic device, wherein the electronic device comprises a processor and a memory configured to store instructions executable by the processor, wherein when the processor is configured to execute the instructions, the electronic device is caused to implement the method according to any one of claims 1 to 12.

14. A computer-readable storage medium, storing computer program instructions thereon, wherein
when the computer program instructions are executed by an electronic device, the electronic device is caused to implement the method according to any one of claims 1 to 12.
